(19)

Europäisches Patentamt

European Patent Office

Office européen des brevets

(11) **EP 4 462 363 A1**

(12) **EUROPEAN PATENT APPLICATION**

(43) Date of publication:
**13.11.2024   Bulletin 2024/46**

(21) Application number: **24175092.6**

(22) Date of filing: **10.05.2024**

(51) International Patent Classification (IPC):
**G06T 9/00** (2006.01)    **H04N 19/119** (2014.01)
**H04N 19/147** (2014.01)    **H04N 19/174** (2014.01)
**H04N 19/184** (2014.01)    **H04N 19/91** (2014.01)

(52) Cooperative Patent Classification (CPC):
**G06T 9/00; H04N 19/119; H04N 19/147;
H04N 19/174; H04N 19/184; H04N 19/91**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023   US 202363465672 P
30.11.2023   US 202318525178**

(71) Applicant: **Nintendo Co., Ltd.
Kyoto 601-8501 (JP)**

(72) Inventor: **SMADJA, Romain
Redmond, WA, 98052 (US)**

(74) Representative: **Bardehle Pagenberg
Partnerschaft mbB
Patentanwälte Rechtsanwälte
Prinzregentenplatz 7
81675 München (DE)**

(54) **SYSTEMS AND/OR METHODS IMPLEMENTING STATISTICAL APPROACH TO TEXTURE COMPRESSION**

(57)    Each of multiple blocks into which a texture has been divided is encoded into multiple block bitstreams. Each block bitstream corresponds to a respective encoding configuration. For each block, the block bitstreams having the lowest distortion values are selected such that up to a predetermined number of distinct block bitstreams are selected. For each selected block bitstream, data chunks are obtained such that each data chunk is a contiguous section of the respective selected block bitstream from which it is obtained. Data chunks of different sizes are obtainable. Collisions among the obtained data chunks are detected. Based on the detected collisions, match chains with redundant data chunks are formed such that, for each match chain, the redundant data chunks therein represent a common value of an associated block bitstream. The best match chains are selected. A lossy encoding of the texture is obtained from the selected best match chains.

Fig. 13

**Description**

CROSS-REFERENCE TO RELATED APPLICATION

This application claims priority to U.S. Application No. 18/525,178 filed on November 30, 2023, which in turn claims the benefit of 63/465,672 filed on May 11, 2023, the entire contents of each of which are hereby incorporated herein by reference.

TECHNICAL FIELD

Certain example embodiments described herein relate to texture compression, which may be used in a three-dimensional virtual environment or the like. More particularly, certain example embodiments described herein relate to a statistical approach for texture compression that produces lossy encoded textures suitable for use with subsequent lossless compression in accordance with Rate Distortion Optimization (RDO).

BACKGROUND AND SUMMARY

Textures are one of the most important assets in virtual environments such as those used in, for example, video games. Textures are materials that act as layers to cover the surface of a three-dimensional (3D) object in order to give it the desired appearance in the virtual environment (e.g., a desired in-game appearance). Most textures are stored as files including a two-dimensional (2D) array of pixels, which are sometimes referred to as texels. The process of mapping these pixels to the object is called texture mapping.

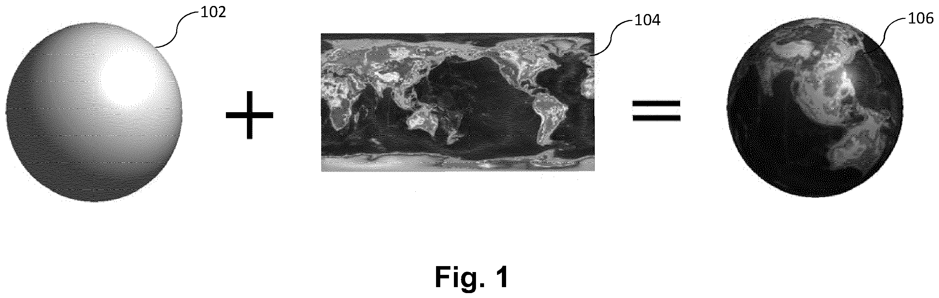

Fig. 1 illustrates a three-dimensional object being wrapped with a two-dimensional texture to produce a texture-mapped object. More particularly, Fig. 1 shows a three-dimensional sphere object 102 and a two-dimensional texture 104 that is a map of the world. Through texture mapping, the texture-mapped object 106 looks like a globe, as the two-dimensional texture 104 is wrapped around the three-dimensional sphere object 102. Lighting effects included with the three-dimensional object 102 are taken into account in the Fig. 1 example, e.g., as can be seen in the texture-mapped object 106 that is generated.

Textures differ in the type of data they store. "Normal maps," for example, store the X, Y, and Z coordinates of the surface normal (a vector that is perpendicular to the local surface of the object). These components can be used to calculate how light reflects at different areas of the object, giving the illusion of more details and hence increased "realism." "Realism" in this sense may reflect a real-world environment, or a more immersive experience, e.g., for settings that clearly are not "real" (such as some virtual gaming environments and the like). Specular maps, on the other hand, generally store grayscale values that can be used to control the shininess of an object. In such cases, the higher the value, the more reflective the area will be. Other common types of textures include diffuse maps, albedo maps, displacement maps, light maps, ambient occlusions, etc.

Texture data generally is not stored "as is." In other words, the textures used in virtual environments like game worlds typically are not stored in a format directly usable in such environments. Instead, texture data typically is stored in a lossy compressed format. Storing texture data in a compressed format provides several technical advantages such as, for example, a reduction in the amount of GPU memory or other memory needed and a reduction in the use of memory bandwidth, e.g., compared to the "raw" texture data.

The compression formats used for textures are different from those used with image compression formats (such as JPEG) and video formats (such as H.264). One difference is that the compression formats used for textures typically encode blocks of pixels independently while producing a fixed-size output for each block. For example, the BC1 format used for compressing textures encodes blocks of 4x4 pixels and outputs a bitstream of 8 bytes per block. Thus, each pixel is encoded with a fixed number of bits (or Bits Per Pixel (BPP)), which is well suited for random GPU access. That is, to access a specific pixel, the GPU computes the address of the block to which it belongs. The GPU then decodes the block on the fly to obtain the pixel data. Because of the fixed bitrate, such formats generally lead to smaller compression ratios compared to formats with a variable bitrate. Common and widely used texture compression formats include, for example, Block Compression (BC) formats like BC1, BC3, BC4, BC5, BC7, and Adaptive Scalable Texture Compression (ASTC), and typical bitrates for such formats range from 8 to 1 BPP.

Texture-related assets generally account for a large part of a game's total storage size. In many situations, limiting their size becomes crucial. For example, some games are stored on physical media such as cartridges. Smaller games can use smaller media (e.g., smaller cartridges), which can lead to lower manufacturing costs and more flexibility in the type of media that is usable. As another example, downloads of digital games could use less server bandwidth, leading to lower computational resources needed on both the server side and the client side, as well as potentially decreased maintenance requirements at the server side.

There are various ways to control texture size. One approach involves creating smaller textures when possible.

For example, a texture having a resolution of 2048x2048 pixels may actually only have a 1024x1024 "useful area," e.g., because the data outside of this area may not be fetched by the GPU (e.g., because the game or other application may not use it). In this case, data outside of the useful area will not be rendered on screen nor used for any rendering computations. In such cases, there may be no need to store such data. In a similar vein, some channels (e.g., color channels, coordinate channels, etc.) may be redundant with others, or again, never accessed by the GPU.

Another common approach, which can be combined with the approaches mentioned above, is to save the (compressed) texture file in a lossless compression format. In other words, a lossy compressed texture file can be further compressed using lossless compression. This is sometimes referred to as "super compression." Lossless formats are often fast to decompress, which typically adds little to negligible overhead to the loading time (which in this case refers to the time it takes for the texture to transit from storage memory (e.g., the cartridge, SSD, or other storage location) to GPU memory (e.g., VRAM)) or other memory location. Lossless compression formats (such as, for example, LZ4 and ZStandard) offer technologically "interesting" tradeoffs between compression ratio and decompression speed.

Although various compression techniques (including super-compression and other techniques) have been widely used for virtual environments (including virtual environments provided in connection with games), further improvements are still possible. For example, it would be desirable to better manage the tradeoff between amount of compression and quality, e.g., while also potentially enabling reasonable compression and decompression times.

Certain example embodiments improve texture compression technology, e.g., by providing improvements to texture compression tools. For example, certain example embodiments provide a statistical approach for texture compression that produces lossy encoded textures suitable for use with subsequent lossless compression in accordance with Rate Distortion Optimization (RDO).

One aspect of certain example embodiments relates to providing a "generic" encoding approach (including a "generic" RDO algorithm) for compression (including texture compression). The encoding approach includes an RDO algorithm that is generic in the sense that bitstream details of the format used for encoding the texture do not need to be known in advance, which means that it becomes almost completely independent from the underlying encoder (e.g., the underlying texture encoder). The encoding approach includes the following: First, each block in the texture is encoded in many different ways (e.g., using a compression format of choice such as, for example, BC1, ASTC, etc.). The generic RDO algorithm looks for collisions, post-encoding, among all encoding configurations of all blocks, recognizing that, from a statistics perspective, such collisions are likely to occur quite frequently and can be taken advantage of in the overall compression approach.

Another aspect of certain example embodiments involves decoupling the generation of the block encoding configurations from downstream processing. As a result, the algorithm of certain example embodiments is parallelizable, and can quickly process many different tradeoffs between quality and size (as controlled by a hyperparameter).

Another aspect of certain example embodiments relates to the advantageous ability to use a wide variety of lossy compression formats. Indeed, because of the genericity described herein, the algorithm of certain example embodiments can perform RDO with compression standards like ASTC, where the bitstream is quite complex.

In certain example embodiments, a method of encoding a texture is provided. The texture is retrieved from a data store. The texture is divided into a plurality of blocks. Each of the blocks is encoded into a plurality of block bitstreams, each of the block bitstreams corresponding to a respective encoding configuration and having a distortion value associated therewith. For each block, the block bitstreams having the lowest associated distortion values are selected for the respective block such that up to a predetermined number of distinct block bitstreams are selected. For each selected block bitstream, a plurality of data chunks are obtained such that each data chunk is a contiguous section of the respective selected block bitstream from which it is obtained, the data chunks for the respective selected block bitstream starting from each position of the respective selected block bitstream and spanning until the end of the of the respective selected block bitstream such that the respective data chunk has a minimum data chunk size. Data chunks of different sizes are obtainable for the selected bitstreams. Collisions are detected among the obtained data chunks. Based on the detected collisions, match chains with redundant data chunks are formed such that, for each match chain, the redundant data chunks therein represent a common truncated value of an associated block bitstream. The best match chains are iteratively selected from among the formed match chains, the best match chains being determined using a hyperparameter. A lossy encoding of the texture is obtained from the iteratively selected best match chains.

In certain example embodiments, the lossy encoded texture may be encoded using a lossless compressor.

In certain example embodiments, the data chunks may start from different byte locations.

In certain example embodiments, for each block, as many distinct block bitstreams as possible, up to the predetermined number, may be selected; and an indicator may be provided for each block for which the number of selected block bitstreams is less than the predetermined number.

In certain example embodiments, input specifying a maximum distortion value for one or more specified blocks in the plurality of blocks may be received; and for each of the one or more specified blocks, only those block bitstreams having distortion values better than the maximum distortion value may be selectable for the respective specified block.

In certain example embodiments, the minimum data chunk size may be at least as large as a minimum size usable by a lossless compressor to which the lossy encoding of the texture is to be applied.

In certain example embodiments, the obtaining of the data chunks may comprise extracting a subset of valid data chunks for a given selected block bitstream; and generating the remaining data chunks for the given selected block bitstream from the extracted subset.

In certain example embodiments, the hyperparameter may trade off rate and distortion and may be a part of a defined function that determines which match chains are best.

In certain example embodiments, the texture may be divided into slices each including a predetermined number of blocks, and the slices may be treated as individual textures to be separately divided into blocks.

In certain example embodiments, match chains that are determined to be not selectable in the iterative selection may not be considered for the formation of the match chains. For instance, a given match chain may be discarded in response to a determination that there is or will be another match chain formed that is equal to or better than the given match chain; application of a function involving the hyperparameter to the match chains may enable different match chains to be compared to one another; and/or the iterative selection may select the best match chains.

In certain example embodiments, a method of encoding a texture is provided. Each of a plurality of blocks into which the texture has been divided is encoded into a plurality of block bitstreams, each of the block bitstreams corresponding to a respective encoding configuration and having a distortion value associated therewith. For each block, the block bitstreams having the lowest associated distortion values are selected for the respective block such that up to a predetermined number of distinct block bitstreams are selected. For each selected block bitstream, a plurality of data chunks are obtained such that each data chunk is a contiguous section of the respective selected block bitstream from which it is obtained. Data chunks of different sizes are obtainable for the selected bitstreams. Collisions among the obtained data chunks are detected. Based on the detected collisions, match chains with redundant data chunks are formed such that, for each match chain, the redundant data chunks therein represent a common value of an associated block bitstream. The best match chains are selected from among the formed match chains, the best match chains being determined using a hyperparameter. A lossy encoding of the texture is obtained from the selected best match chains.

In certain example embodiments, a texture encoding system is provided. A data store stores a texture. A memory is provided, and at least one processor is configured to perform operations comprising: retrieving the texture from a data store; dividing the texture into a plurality of blocks; encoding each of the blocks into a plurality of block bitstreams, each of the block bitstreams corresponding to a respective encoding configuration and having a distortion value associated therewith; for each block, selecting the block bitstreams having the lowest associated distortion values for the respective block such that up to a predetermined number of distinct block bitstreams are selected; for each selected block bitstream, obtaining a plurality of data chunks such that each data chunk is a contiguous section of the respective selected block bitstream from which it is obtained, the data chunks for the respective selected block bitstream starting from each position of the respective selected block bitstream and spanning until the end of the of the respective selected block bitstream such that the respective data chunk has a minimum data chunk size, wherein data chunks of different sizes are obtainable for the selected bitstreams; detecting collisions among the obtained data chunks; based on the detected collisions, forming match chains with redundant data chunks such that, for each match chain, the redundant data chunks therein represent a common truncated value of an associated block bitstream; iteratively selecting the best match chains from among the formed match chains, the best match chains being determined using a hyperparameter; and obtaining a lossy encoding of the texture from the iteratively selected best match chains.

In certain example embodiments, the lossy encoded texture may be encoded using a lossless compressor.

In certain example embodiments, the data chunks may start from different byte locations.

In certain example embodiments, for each block, as many distinct block bitstreams as possible, up to the predetermined number, may be selected; and an indicator may be provided for each block for which the number of selected block bitstreams may be less than the predetermined number.

In certain example embodiments, input specifying a maximum distortion value for one or more specified blocks in the plurality of blocks may be received; and for each of the one or more specified blocks, only those block bitstreams having distortion values better than the maximum distortion value may be selectable for the respective specified block.

In certain example embodiments, the obtaining of the data chunks may comprise: extracting a subset of valid data chunks for a given selected block bitstream; and generating the remaining data chunks for the given selected block bitstream from the extracted subset.

In certain example embodiments, a method of encoding a texture is provided. Each of a plurality of blocks into which the texture has been divided is encoded into a plurality of block bitstreams. For each block, up to a predetermined number of distinct block bitstreams are selected. For each selected block bitstream, a plurality of data chunks are obtained such that each data chunk is a contiguous section of the respective selected block bitstream from which it is obtained. Collisions among the obtained data chunks are detected. Based on the detected collisions, match chains with redundant data chunks are formed such that, for each match chain, the redundant data chunks therein represent a common value of an associated block bitstream. A set of match chains is iteratively selected from among the formed match chains based on a hyperparameter. At least some potential match chains are determined to be not selectable in the iterative selection and are not considered during the formation of the match chains. A lossy encoding of the texture is obtained from the selected set of match chains.

In certain example embodiments, there is provided a non-transitory computer readable storage medium storing instructions that, when executed by a processor, cause a computer to perform operations comprising: encoding each of a plurality of blocks into which the texture has been divided into a plurality of block bitstreams; for each block, selecting up to a predetermined number of distinct block bitstreams; for each selected block bitstream, obtaining a plurality of data chunks such that each data chunk is a contiguous section of the respective selected block bitstream from which it is obtained; detecting collisions among the obtained data chunks; based on the detected collisions, forming match chains with redundant data chunks such that, for each match chain, the redundant data chunks therein represent a common value of an associated block bitstream; iteratively selecting a set of match chains from among the formed match chains based on a hyperparameter, wherein at least some potential match chains are determined to be not selectable in the iterative selection and are not considered during the formation of the match chains; and obtaining a lossy encoding of the texture from the selected set of match chains.

In certain example embodiments, a texture encoding system is provided. A data store stores a texture. A memory is provided. At least one processor configured to perform operations comprising: for each block, selecting up to a predetermined number of distinct block bitstreams; for each selected block bitstream, obtaining a plurality of data chunks such that each data chunk is a contiguous section of the respective selected block bitstream from which it is obtained; detecting collisions among the obtained data chunks; based on the detected collisions, forming match chains with redundant data chunks such that, for each match chain, the redundant data chunks therein represent a common value of an associated block bitstream; iteratively selecting a set of match chains from among the formed match chains based on a hyperparameter, wherein at least some potential match chains are determined to be not selectable in the iterative selection and are not considered during the formation of the match chains; and obtaining a lossy encoding of the texture from the selected set of match chains.

In certain example embodiments, a given match chain may not be considered in response to a determination that there is or will be another match chain formed that is equal to or better than the given match chain.

In certain example embodiments, application of a function involving the hyperparameter to the match chains may enable different match chains to be compared to one another.

In certain example embodiments, the iterative selection may select the best match chains.

In certain example embodiments, the lossy encoded texture may be encoded using a lossless compressor.

In certain example embodiments, the block bitstreams having the lowest associated distortion values for the respective block may be selected such that up to the predetermined number of distinct block bitstreams are selected.

In certain example embodiments, data chunks of different sizes may be obtainable for the selected bitstreams.

In certain example embodiments, a method of providing a virtual environment in connection with a computing system is provided. An encoded texture is retrieved from a non-transitory computer readable storage medium, the texture having been encoded using an approach (e.g., a method) described herein. The encoded texture is provided to at least one processor of the computing system for decoding of the texture and use of the decoded texture in the virtual environment.

In certain example embodiments, a non-transitory computer readable storage medium stores instructions that, when executed by a processor, cause a computer to perform operations corresponding to an approach (e.g., a method) described herein.

In certain example embodiments, a computing system is provided via which a virtual environment is displayable. The system comprises a memory coupled to one or more processors configured to perform operations comprising: retrieving an encoded texture from a non-transitory computer readable storage medium, the texture having been encoded using an approach (e.g., a method) disclosed herein; and providing the encoded texture to at least one of the one or more processors of the computing system for decoding of the texture and use of the decoded texture in the virtual environment.

The features, aspects, advantages, and example embodiments described herein may be used separately and/or applied in various combinations to achieve yet further embodiments of this invention.

BRIEF DESCRIPTION OF THE DRAWINGS

These and other features and advantages may be better and more completely understood by reference to the following detailed description of exemplary illustrative embodiments in conjunction with the drawings, of which:

FIGURE 1 illustrates a three-dimensional object being wrapped with a two-dimensional texture to produce a texture-mapped object;
FIGURE 2 shows three encodings of the same texture, along with the size and Peak Signal to Noise Ratio (PSNR) for each;

FIGURE 3 is an example showing the extraction of different encoding configurations, in accordance with certain example embodiments;

FIGURE 4 shows the extracting of chunks from an example encoding configuration, in accordance with certain example embodiments;

FIGURE 5 shows a numerical example of match chain identification, in accordance with certain example embodiments;

FIGURES 6-8 help demonstrate how optimal match chains are created in certain example embodiments;

FIGURE 9 illustrates one iteration of the match chain resolution procedure of certain example embodiments;

FIGURE 10 schematically shows a texture split into 4 slices in accordance with the texture slicing approach of certain example embodiments;

FIGURE 11 helps illustrate when a match chain may be discarded in connection with certain example embodiments;

FIGURE 12 shows an example of algorithm factorization in accordance with certain example embodiments;

FIGURE 13 is a flowchart showing a process for generating encoded textures in accordance with certain example embodiments;

FIGURE 14 is a block diagram showing a computing architecture that may be used in connection with the Fig. 13 example flowchart, in accordance with certain example embodiments;

FIGURE 15 is a flowchart showing a process for decoding textures encoded via the techniques described herein, in accordance with certain example embodiments; and

FIGURE 16 is a block diagram showing a computing device that may be used in connection with the Fig. 15 example flowchart, in accordance with certain example embodiments.

DETAILED DESCRIPTION

Certain example embodiments relate to texture compression techniques and, more particularly, to systems and/or methods for texture compression suitable for use with virtual worlds such as those used in video games and the like.

Texture encoding refers to the process of applying a texture encoder to a texture. A texture encoder will encode a texture by processing the pixels into independent blocks (typically a 4x4 square window) and output a bitstream for each of these blocks (typically 8 or 16 bytes, depending on the formats). A bitstream is the binary sequence produced by a texture encoder as a result of encoding a texture. This can either refer to the binary sequence obtained after encoding a single block of pixels from the texture, or after encoding the texture as a whole.

Compression and encoding are related and may be used interchangeably in some circumstances. Encoding data generally refers to the process of changing one data representation into another. For example, the value "15" can be encoded in hexadecimal as "0xF." On the other hand, compressing data means effectively reducing the size of the data. Very often, encoding data will lead to smaller data; thus, from this viewpoint, encoding can be a form of compression, but it does not necessarily have to be. Encoding and compression techniques can be lossy or lossless. Lossless compression (encoding) means that the compressed (encoded) data can be decompressed (decoded) back to allow perfect reconstruction of the original data. Common lossless compressors include LZMA, ZStandard, and LZ4. Texture encoders generally are not lossless. The PNG format is an example of lossless encoding followed by a lossless compression.

The inventor has observed that texture encoders generally have many ways of encoding a given block of pixels, often for a very little additional cost in quality. This follows from the fact that such texture compression formats use a fixed bitrate per block, which oftentimes is unnecessarily high for the complexity of the blocks to be encoded. Second, the inventor has recognized that lossless compressors generally will achieve better compression if more redundancies appear in the data. Therefore, by carefully choosing encoding configurations for texture blocks, it becomes possible to maintain a high texture quality while achieving good compression ratios. Certain example embodiments provide an advantageous technical effect of high quality and good compression in the case of texture compression technology.

Certain example embodiments employ a Rate Distortion Optimization (RDO) approach. RDO is an approach used in lossy image/video compression to jointly optimize two criteria during the encoding process, namely, the rate (the size of the data), and the distortion (the quality of the asset). The distortion is generally measured with a metric. A smaller rate generally means higher distortion, hence the desire for optimization.

As applied to texture compression, RDO encodes the texture not only by optimizing the quality alone, but rather by jointly optimizing both the size of the texture (which should be understood as the size after being compressed by the lossless compressor) and the quality. These two "axes" are the rate and distortion mentioned previously. The optimization process can be represented by a hyperparameter that in turn represents a tradeoff between quality and storage. Changing the hyperparameter value favors one of the two axes over the other, leading either to a texture with better quality at a cost of more storage, or with lower quality but smaller size. For example, depending on the cost function, a high value of the hyperparameter can mean that the rate is favored over the distortion. In the context of texture compression where encoders produce fixed-size bitstreams (a fixed rate), the rate can be influenced by leveraging the lossless compressor.

"Rate" in RDO formalism refers to the size of data after encoding/compressing an asset. In contrast, in the context of texture encoding with RDO, an attempt is made to estimate rate at the level of blocks of texture. Rate thus implicates how much storage size is expected to be saved when choosing a given encoding configuration for a given block, after applying lossless compression to the texture. As a concrete example, it is possible to estimate that choosing encoding configuration number 3 for block number 24 would reduce the texture size by 2 units (bytes, for instance), so the rate will be 2. "Distortion" in RDO formalism refers to the quality of an asset after being encoded/compressed, with the idea that the higher the distortion, the worse the quality of the asset. In the context of texture encoding with RDO, distortion at the level of blocks of texture is measured. Distortion thus implicates how much quality loss will be incurred as a result of choosing a given encoding configuration for a given block. As a concrete example, it is possible to estimate that choosing encoding configuration number 3 for block number 24 would decrease the block quality by 2 units (decibels for instance), so the distortion will be 2. Further details concerning rate and distortion in the RDO context of certain example embodiments are provided below.

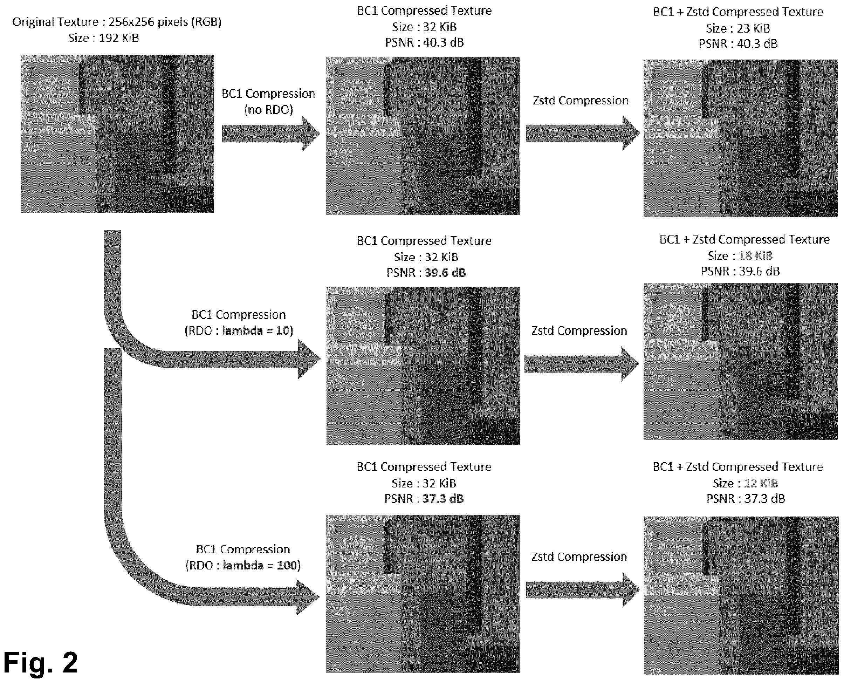

Fig. 2 shows three encodings of the same texture, along with the size and Peak Signal to Noise Ratio (PSNR) for each. PSNR is a widely-used metric for image quality assessment. The unit of PSNR is decibels (dB). The higher the PSNR value, the higher the texture overall quality. In Fig. 2, the topmost encoding is a standard block compression using BC1 encoding (a lossy format), without RDO, whereas the two encodings below are BC1 encodings with RDO, using different values for the hyperparameter (referred to as lambda). As indicated by the PSNR, the RDO-encoded textures have lower quality; however, their size after the compression by the lossless ZStandard format (shown as Zstd in Fig. 2) has been reduced. It will be appreciated that the images, formats, and numbers are provided for illustration purposes only; these and/or other lossy and/or lossless encoders can be used with these and/or other lambda values in connection with these and/or other images/textures, which may result in different metrics (measured with PSNR or some other metric) and/or different size reductions.

As described in greater detail below, certain example embodiments provide a statistical approach to RDO in connection with a texture collision algorithm. The texture collision algorithm of certain example embodiments is advantageous in several respects. First, the approach of certain example embodiments uses a statistical principle known as the birthday paradox. This is a statistical result stating that by repeatedly generating values from a variable, "collisions" (a value previously obtained) arrive much faster than what one's commonsense otherwise would have imagined, hence the paradox. In the case of texture compression, certain example embodiments extract many encoding configurations for a given block and exploit the high collision rate that is obtained with surrounding blocks, which themselves also have many possible encoding configurations. As alluded to above, an encoding configuration is, given a texture encoder, a possible and valid way of encoding a block of pixels (i.e., producing a valid bitstream for this block). The algorithmic approach becomes almost completely independent from the underlying texture encoder. That is, once the algorithm obtains a "catalog" of encoding configurations for each block, it can work with only very basic information about the encoder, such as block bitstream size and block dimensions. More precisely, certain example embodiments need not know details about the block bitstream structure such as header, colors, weights, partitions, and so on. In contrast, conventional RDO approaches would have required a precise description of this and/or other information. The approach of certain example embodiments thus opens the door to compatibility with a wide range of lossy encoders / texture formats, including (for example) ASTC, which has been a stumbling block for many encoders over the years. Also, the algorithmic approach of certain example embodiments basically can find matches with completely unrelated data. A "match" in the context of conventional lossless compression is defined as the collision (repetition) of some chunks of data in the source to be compressed. Lossless compressors take advantage of such redundancies, for example, by replacing one or several of the duplicated chunks with a reference to another, leading to smaller data. Unlike some conventional approaches, certain example embodiments as noted can find matches with completely unrelated data; for instance, it can match the colors of one block with the weights of another, if it judges it "interesting" or useful to do so.

A second advantage relates to texture encoder decoupling. The texture encoders of certain example embodiments are not "RDO aware" in the sense that they extract many encoding configurations for each texture block. This is contrastable with conventional encoders, which typically only choose the best quality configuration. That is, in certain example embodiments, it becomes possible to decouple the generation of the block encoding configurations from other operations downstream in the encoding pipeline. The approach of certain example embodiments thus is easily parallelizable, and can process quickly several different tradeoffs between quality and size, that is, several different values for the hyperparameters.

A third advantage that follows relates to (lambda-)factorization. Because of the decoupling between texture encoding and RDO, it becomes possible to "factorize" texture encoding and produce many RDO-encoded versions of the texture, each one with a different hyperparameter value (and thus a different quality vs. compression tradeoff). As shown in greater detail below, it becomes possible to factorize most of the core steps of the texture collision algorithm of certain example embodiments, thereby reducing the lambda-dependent part to its minimum. In other words, it becomes possible to output many versions of the encoded texture with very little additional time compared to outputting a single one.

The Birthday Paradox in Texture Compression

This section helps to illustrate the birthday paradox as applied to texture compression. Assume that K random numbers between 1 and N are drawn (with equiprobability and "with replacement," meaning that it is possible to draw the same number several times). Then, the expected collision rate (the average number of draws that will lead to a duplicated number) E is given by the following formula:

$$E = K * \left( 1 - \left( \frac{N-1}{N} \right)^{K-1} \right)$$

Assume that a texture of 256x256 pixels is to be encoded in ASTC format, with a block size of 4x4 pixels. This corresponds to 4,096 blocks. As per the ASTC format, each block will be encoded on 16 bytes. Suppose, for the sake of this illustration, that the expected number of 4-byte matches that will be present in the encoded texture is to be counted. Because the encoded size will be 65,536 bytes (4,096 x 16 bytes), this represents a total of 65,533 contiguous chunks of 4 bytes. The above formula is applied to determine the expected collision rate of these chunks, or how many chunks will be expected to have the same value as at least another one. In particular, applying the above formula with $N = 2^{32}$ (the range of integer values that a chunk of 4 bytes can take), and K = 65,533 (the number of 4-byte chunks), indicates that $E = 0.9988 \approx 1$.

Now, imagine that the texture is "enlarged" up to 1,024 times its original size. This corresponds to a texture of 8,192x8,192 pixels, i.e., 4,194,304 blocks of 4x4 pixels. If E is computed for the encoded texture, N still equals $2^{32}$, but now K is 6,7108,861, which gives E = 1,040,426.

To summarize, by multiplying the texture size by 1,024, the expected collision rate is in turn multiplied by more than 1 million.

As a general matter, it is not really useful to increase texture size / texture dimensions in practice. However, a similar effect can be obtained in a different way. That is, if many encoding configurations can be extracted for each block, it becomes possible to reproduce conditions similar to the scenario illustrated, while still working with the original texture dimensions. Certain example embodiments in essence proceed in this manner.

It is noted that this example was simplified in many ways. In practice, not all 4-byte values are likely to be attainable because some would correspond to irrelevant (and sometimes invalid) bitstreams. Furthermore, textures generally exhibit strong spatial correlation patterns in some areas, which would lead to a large increase of match probability in such regions. The example as well as the mathematical formula of E assumes uncorrelated values. Typical super-compression ratios for ASTC-encoded textures (defined as the ratio between the size of the ASTC-encoded texture and the size of the ASTC-encoded and lossless compressed texture) range from 1 to 1.3, which tends to show that, in practice, the collision rate is higher than what has been computed. The practical reality thus can lead the techniques disclosed herein to function even better than a strict mathematical interpretation of the birthday paradox would suggest.

The Texture Collision Algorithm of Certain Example Embodiments

The texture collision algorithm of certain example embodiments can be broken down into different (notional) stages. Each is described in greater detail below.

Stage 1: Multi-Configuration Texture Encoding

As this first stage, the texture encoder encodes the texture, returning for each block not only the best encoding configuration (i.e., block bitstream), but rather the top N list of the distinct, best ones. In certain example embodiments, "best" should be understood as having the minimal distortion. Typical values for N can range from 128 to 4,096, e.g., depending on the texture encoder at hand, but also the memory consumption required to store these configurations. The "Texture Slicing" section below provides a discussion about memory consumption. These values for N have been found to work well, but higher or lower values can be used in different implementations.

In addition to the bitstream, a distortion value is stored for each of these encoding configurations. The "Rate and Distortion" section below provides a discussion with examples of possible metrics that may be used in certain example implementations.

For some blocks, it may be the case that the list could not be entirely filled. One example of when this might occur is when some regions in the texture need to be handled with extra care. For instance, textures often have completely flat regions, and any visual artifact introduced in such regions is generally extremely noticeable and hence rarely desired. For such cases, one may want to simply keep the configuration having the least distortion. More generally, it may be desirable to explicitly control the distortion values and thus the number of encoding configurations for some blocks. In any case, when the encoder would not return the maximum number of configurations it is allowed to get, an indicator within the storage buffer right after the last valid configuration may be provided to indicate the end of the list.

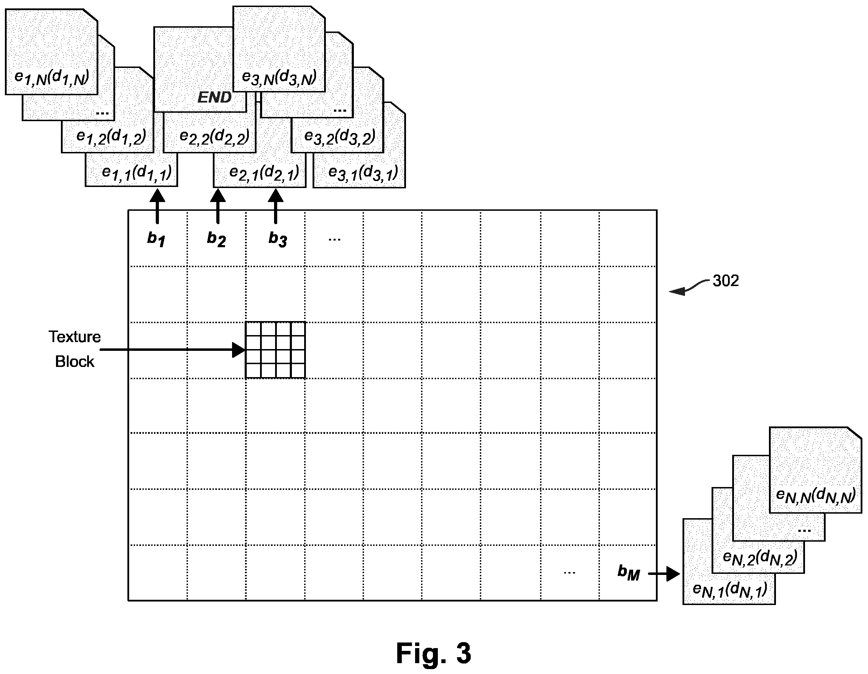

Fig. 3 is an example showing the extraction of different encoding configurations, in accordance with certain example embodiments. In Fig. 3, the area 302 is a texture split into M texture blocks, with the encoding configurations for these blocks represented by the gray boxes with folded corners. Each block has N possible encoding configurations. $e_{i,j}$ refers to encoding configuration number j for block number i ($b_i$), and $d_{i,j}$ is the distortion value associated with this encoding configuration. "END" is the marker indicating the end of encoding configurations, if the list is not entirely filled. For a given block $b_i$, the encoding configurations are sorted by increasing distortions ($d_{i,1} \leq d_{i,2} \leq \cdots \leq d_{i,N}$).

Stage 2: Chunks Extraction

This stage extracts contiguous groups of bytes (also referred to as chunks) from the bitstreams gathered via the previous stage. For a given bitstream, chunks are extracted starting from all byte positions and spanning until the end of the bitstream. In certain example embodiments, each chunk size is greater than a given value, specified as a modifiable parameter, MIN_MATCH_SIZE.

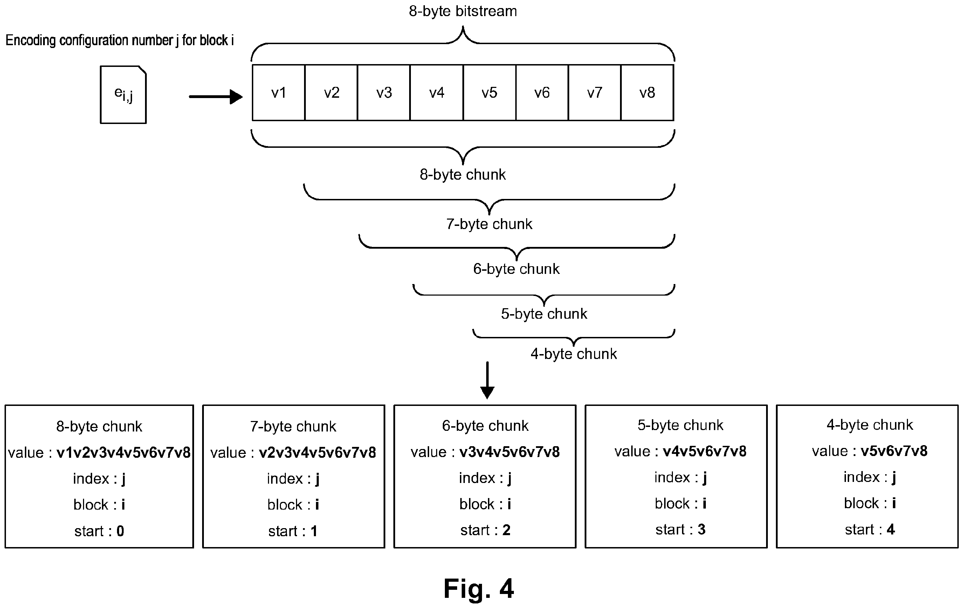

To help understand the operation of this stage, consider the following example, where the texture encoder is BC1. BC1 produces for each block a bitstream of 8 bytes. In this example, MIN_MATCH_SIZE is set to 4. In keeping with this illustration, Fig. 4 shows the extracting of chunks from an example encoding configuration, in accordance with certain example embodiments. As can be seen from Fig. 4, five chunks are extracted from the BC1 bitstream, going from 4-byte size to 8-byte size. For each of these extracted chunks, additional information elements that will be useful for the subsequent stages also are stored. These additional information elements include: the encoding configuration index (j in Fig. 4), the block index (i in in Fig. 4), and the start position of the chunk within the bitstream (0 means the chunk starts at first byte).

It is not necessary to extract more chunks because from these five chunks, it is possible to obtain all values in the bitstream by removing some end bytes from these chunks (e.g., via a masking process). For example, it is possible to obtain value v2v3v4v5 by taking the 7-byte chunk (having value v2v3v4v5v6v7v8) and masking its last three bytes (v6, v7, v8).

The MIN_MATCH_SIZE value may vary in different example embodiments. For example, it has been found that the MIN_MATCH_SIZE may depend on the lossless compressor being used. Typically, LZ4 will not consider a match strictly smaller than 4 bytes, so it would be counter-productive to extract chunks of this size. It is desirable to create redundancies in the final texture bitstream so that lossless compressors can compress the texture more efficiently. It does not make much sense to look for a match of 3 bytes if it is known or expected that the compressor will not look at them. ZStandard can consider 3-byte matches, but efficiency is not guaranteed. In fact, most lossless compressors will start to really take advantage of matches starting from a 4 byte size, which therefore may be a default value used in certain example embodiments.

The MAX_MATCH_SIZE is defined as being the maximum match size that the texture collision algorithm will consider. By default, it may be set to equal the bitstream size, as chunks larger than this value cannot be extracted. It is possible to choose a smaller value. There may be some instances where there would be a particular reason to avoid such match size, so the value could be lowered from this default.

Stage 3: Creating Match Chains

This stage includes several sub-stages, including sub-stages for collision detection and for creating optimal match chains.

*Stage 3.1: Collision Detection*

Once bitstream chunks have been extracted for all encoding configurations of all blocks, collisions between them are detected in order to identify matches. To perform this detection, the chunks may be processed by increasing match size, going from
MIN_MATCH_SIZE to MAX_MATCH_SIZE.

For the smallest match size (MIN_MATCH_SIZE), all chunks are sorted on their value truncated to MIN_MATCH_SIZE bytes. For example, if MIN_MATCH_SIZE = 4, then with the Fig. 4 example, the 8-byte chunk will be truncated to v1v2v3v4, the 7-byte chunk will be truncated to v2v3v4v5, and so on. Because these values are integers (32-bit values for a 4-byte chunk), an efficient implementation of Radix Sort may be used to sort the chunk buffer in linear time. This provides immediately duplicated values and, hence, matches.

It will be appreciated that other sort algorithms may be used in different example embodiments. Furthermore, additional optimizations may be implemented to help accelerate the collision detection. For example, to locate matches of the upper size, the following and/or other optimizations are possible. First, only chunks that are already known to have duplicates at a previous chunk size need to be sorted. For example, to sort chunks on a match size of 5 bytes, it is possible to consider only chunks that had duplicates on the 4-byte match size, because if a given chunk did not match on 4 bytes, it cannot match on 5 bytes. In practice, this approach has been found to drastically reduce the number of chunks to sort.

Second, chunks that are not big enough to handle the current match size can be discarded. Referring once again to Fig. 4 for the purposes of illustration, the 4-byte chunk cannot be considered for a match size of 5 bytes because it cannot be "extended" as doing so would lead outside the bitstream data. The start position is used to detect and discard these "non-extensible" chunks.

Third, as all chunks have already been sorted on the previous match size, using an incremental sort algorithm allows the chunks to be sorted on only the additional byte. Again, in practice, this approach has been found to drastically reduce the processing time. For example, assuming that the chunk buffer has already been sorted on the first 4 bytes (and assuming that the sort is stable), to sort the chunks on 5 bytes would only involve sorting according to the fifth byte. This procedure can be done again in linear time with efficient radix sorting, using a single pass, for example.

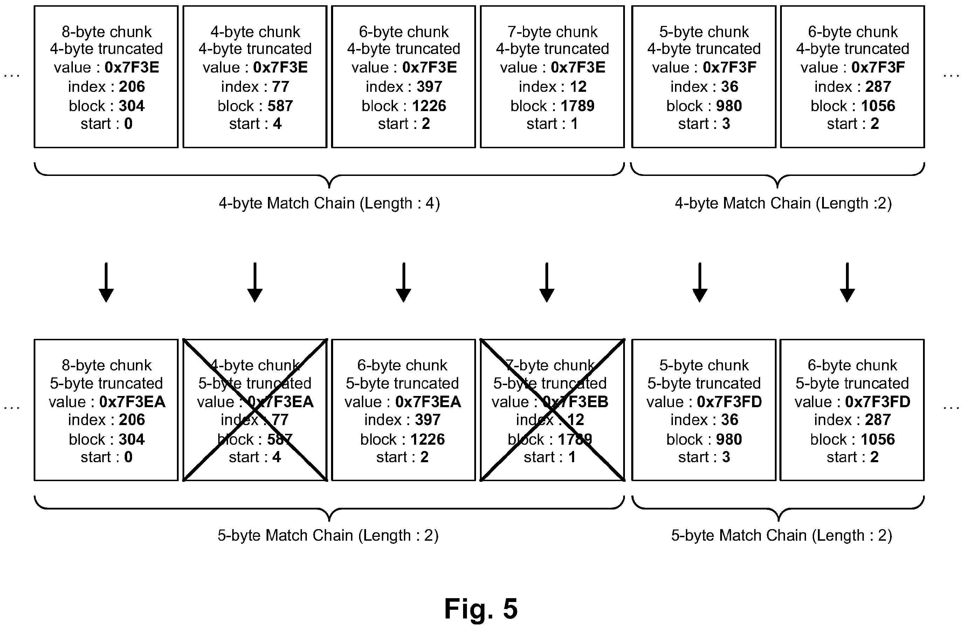

A group of duplicated values may be thought of as being a match chain. Fig. 5 shows a numerical example of match chain identification, in accordance with certain example embodiments. The top part of Fig. 5 shows an extract of 4-byte chunk collisions. When moving to the upper match size (as in the bottom part of Fig. 5), it can be seen that some chunks still collide on 5 bytes. However, some chunks cannot be extended on 5 bytes (the left crossed-through chunk), or do not collide anymore (the right crossed-through chunk).

It will be appreciated that it is possible that some colliding chunks refer to the same block but use a different encoding configuration. Because certain example embodiments will operate so that only one encoding configuration per block will be chosen in the end, such type of matches in practice are not made. When such cases happen, only the chunk coming from the encoding configuration having the least distortion is kept in the match chain, while the others are removed.

*Stage 3.2: Creating Optimal Match Chains*

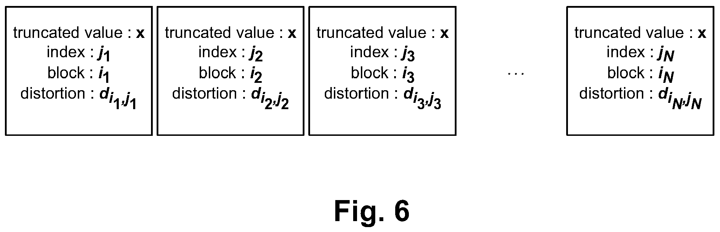

Figs. 6-8 help demonstrate how optimal match chains are created in certain example embodiments. In Fig. 6, the match chain contains all redundant chunks of a given value: X. As a reminder, X is a truncated value (for example, a 4-byte truncated value) of the associated encoding configuration of index j for block i: $e_{i,j}$. The chunk's start position is omitted from this representation because it is not needed here. However, the distortion ($d_{i,j}$) has been added. As a reminder, this is the distortion incurred on a block as a result of choosing the associated encoding configuration for this block ($e_{i,j}$).

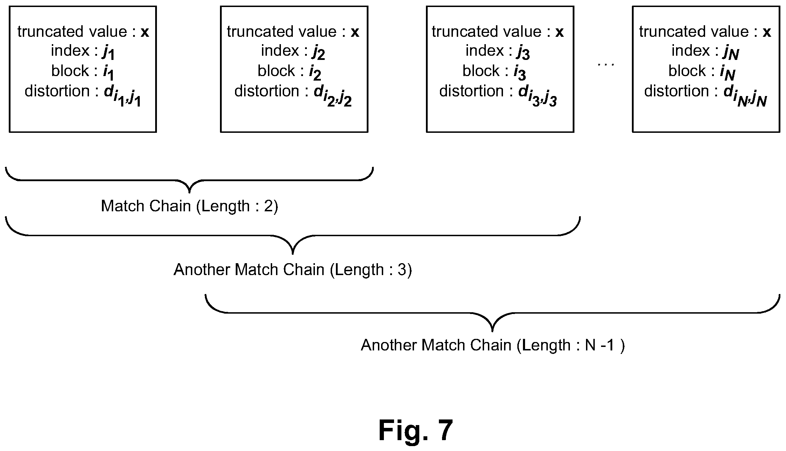

All these redundant chunks form a chain of length N. However, it is possible to create from this chain smaller match chains, with fewer chunks. For example, it is possible to group the first three chunks, and this would also form another chain, e.g., as shown in Fig. 7.

As will be appreciated from Fig. 7, there are many ways of forming a chain. From a length-N chain, there are $2^N - N - 1$ ways of forming new chains (assuming that a chain needs to contain at least two duplicated values). All these newly formed chains have their own rate and distortion, which makes each of them potentially interesting to consider, but keeping them all may not be feasible as N can potentially be any value. For example, with N = 16, there would be 65,519 chains to store.

It is possible to reduce this number due to suboptimality. In certain example embodiments, a match chain is treated as suboptimal if there exists another chain that represents a better tradeoff between rate and distortion. However, if no such chain exists, certain example embodiments deem that this chain is an optimal chain.

To understand this, assume that in Fig. 7 the chunks are sorted from left to right by increasing distortion. That is, assume $d_{i_1,j_1} \le d_{i_2,j_2} \le \cdots \le d_{i_N,j_N}$.

Now, suppose that the chain composed of the first two chunks in Fig. 7 is "applied." Applying the chain in this context sets encoding configuration $j_1$ to block $i_1$ and encoding configuration $j_2$ to block $i_2$. The lossless compressor will see a value (X) in the texture bitstream that will repeat two times, and such redundancy will then lead to a certain storage gain R (rate). The quality loss (distortion) incurred by choosing these two encoding configurations will be the sum of the two distortions: $D = d_{i_1,j_1} + d_{i_2,j_2}$.

Now, consider instead the chain composed of the second and third chunks in Fig. 7. After having set the two encoding configurations $j_2$ and $j_3$ to blocks $i_2$ and $i_3$ respectively, the situation for the lossless compressor will be similar as previously: It will see the same duplicated value (X), leading then to the same rate R. However, the distortion will now be: $D = d_{i_2,j_2} + d_{i_3,j_3} \ge d_{i_1,j_1} + d_{i_2,j_2}$.

Thus, certain example embodiments favor the first chain over the second one, because it has same rate while having lesser distortion. In other words, the first chain "beats" the second one; therefore, the second chain is deemed a suboptimal chain. Based on the above, it is conjectured that there are actually only N - 1 optimal chains, namely, the one composed of the first two chunks, the second composed of the first three chunks, etc., until the one composed of all the chunks.

It is noted that the use of the terms "optimal," "optimized," and the like, as used here and elsewhere, does not necessarily mean "most optimal," "fully optimized," or the like. For example, here, calling these chains optimal is not rigorously exact, because it is not yet known whether they are in fact the most optimal. Indeed, among all the chains that will be formed (coming from all the chunks of all encoding configurations of all blocks), it may happen that some are better than these. For example, it is possible that there exists another chain that turns out to have a better tradeoff between rate and distortion than any of the N - 1 chains here. At this point, however, it is known that the chains that were discarded are suboptimal because they are all beaten by at least one of the N - 1 chains considered, so these N - 1 chains may be treated as optimal at least at this point in the process.

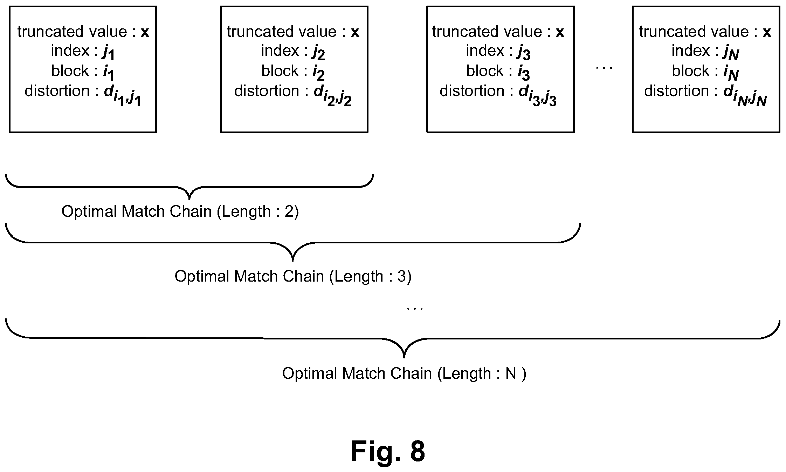

As can be seen from Fig. 8, the number of chains has been drastically reduced, from $2^N$ - N - 1 down to N - 1. Certain example embodiments are not missing anything by considering these chains only, and discarding the others. As will be seen below in the description of the next stage, the chains will be applied following a specific order (controlled by the hyperparameter lambda). Each time a chain will be applied, some blocks will be set to a specific encoding configuration, and once blocks are set, they cannot be changed anymore. Referring back to the example above, it can be seen that the chain formed by the first and second chunks and the chain formed by second and third chunks conflict with each other. That is, they both reference block $i_2$, which means that applying one makes the other not applicable anymore. But thanks to optimality, it would be suboptimal to apply the second chain instead of the first one, so that second chain is unneeded and it can be discarded. In the case that block $i_1$ was already set, then the chain composed of the first and second chunks is not applicable anymore (because it references block $i_1$), and the chain composed of second and third chunks has logically become an optimal chain. But there is a problem because that chain has not been kept and it therefore cannot be applied. In this case, once block $i_1$ is set, this chain "naturally" becomes available: Indeed, when considering the optimal chain composed of the first three chunks (length 3), once block $i_1$ is set, it becomes only composed of second and third chunks, which is the chain of interest. Thus, keeping only the optimal chains is actually sufficient, because these chains will break down to smaller chains that will be the optimal ones in the current context, and therefore it is not necessary to keep the other chains that were discarded.

It is noted that the hyperparameter lambda controls the tradeoff between rate and distortion. Without the hyperparameter, certain example embodiments are unable to determine which chain from among the chains represents a better tradeoff than the others, and thus which one is really optimal compared to the others. For example, the chain composed of the first two chunks has a lower distortion than the one composed of the first three chunks; however, the former has a worse rate than the latter (because the rate increases with the chain length). As will be appreciated from the below, by using the hyperparameter and introducing the notion of cost, it becomes possible to answer the question of which chain represents the best tradeoff.

Stage 4: Resolving Matches

This stage helps to effectively apply the chains kept during the previous stage. There may be many (supposedly optimal) chains that all reference different (and potentially common) blocks, so a determination is made as to the order in which they are to be applied. The hyperparameter $\lambda$ (lambda) helps in this regard. The hyperparameter controls the tradeoff between rate and distortion. It can be thought of as a sort of "market price" between exchanging one unit of rate vs. one unit of distortion. The notion of cost also is introduced. Cost (C) is defined by the following formula:

$$C = D - \lambda R$$

where $D$ denotes the distortion and R the rate. The distortion is computed as the sum of all distortions composing the chain (of length N):

$$D = \sum_{i=1}^{N} d_i$$

It is noted that C = $R$ - $\lambda$ $D$ is another formula that could be used to define cost. However, in the paragraphs that follow in the rest of this section, it is assumed that the cost function is equal to $D$ - $\lambda$ $R$.

As discussed above, the rate R corresponds to the storage gain that will be realized by applying the chain. This can be difficult to compute, as it depends on the behavior of the lossless compressor. Thus, certain example embodiments provide an estimator of how many bytes of "savings" the lossless compressor will enable, considering the matches introduced in the texture bitstream as a result of applying the chain. The Rate and Distortion section below provides further details in this regard.

The formula for C provided above correctly models the tradeoff between rate and distortion but can be improved. Namely, each time one chain is applied, the encoding configuration of blocks is set once for all. This means that these blocks cannot be set anymore. But it would be desirable to avoid favoring longer chains over smaller ones, otherwise certain example embodiments might "exhaust" blocks very quickly. Thus, certain example embodiments may consider a cost per block ($C_{block}$):

$$C_{block} = \frac{C}{N} = \frac{D - \lambda R}{N}$$

In certain example embodiments, the procedure works as follows. Initially, each block is marked as "Unset." At each round, all chains are processed and their cost $C_{block}$ is calculated. Positive costs imply an ineffective rate vs. distortion tradeoff, so these chains are skipped. The chain having the minimal (negative) cost is taken and applied. As discussed above, applying a chain involves updating the texture, setting for each concerned block the encoding configuration referenced by the chain. Each of these referenced blocks is then marked at "Set." From each block, it becomes possible to reference all chains to which it belongs. Thus, once a block becomes "Set," each chain referencing it is updated by "removing" the block from it. Removing a block from a chain involves decrementing its length by 1 while also subtracting the distortion for this block.

This procedure is repeated until one of the following conditions is met: (1) all blocks are marked as "Set"; (2) all chains have been applied; or (3) the remaining chains are either not applicable (the length is strictly smaller than 2), or have a positive cost. It will be appreciated that a chain having a positive cost does not necessarily mean it will stay so forever. As discussed above, chains will break down to smaller chains, and it may be the case that one of these smaller chains may have a negative cost (and thus represents an interesting rate vs. distortion tradeoff) and can then be selected by the above procedure.

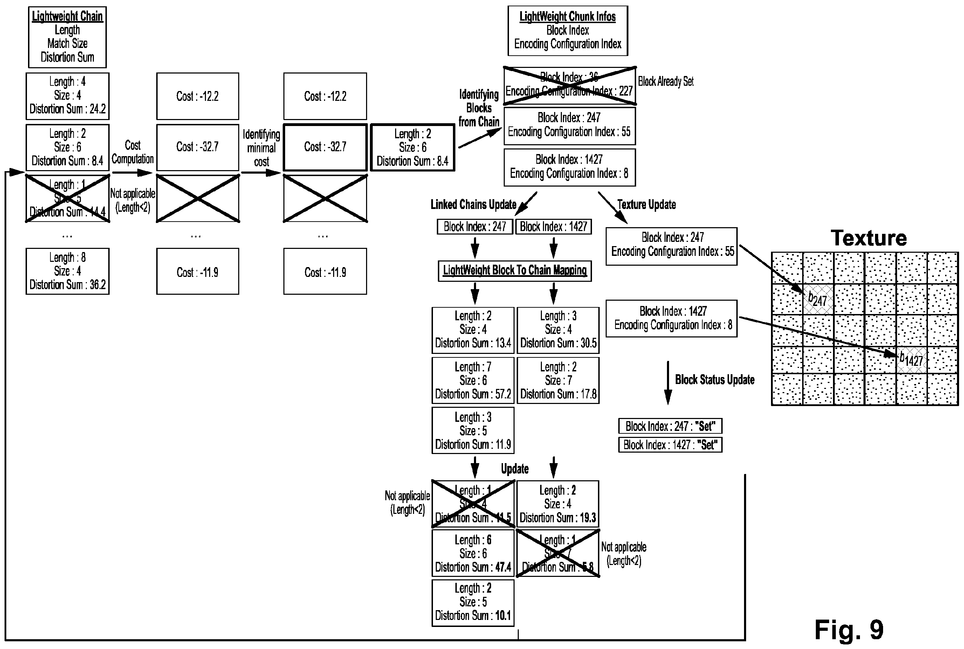

Fig. 9 illustrates one iteration of the match chain resolution procedure of certain example embodiments. Fig. 9 starts from choosing the chain to apply at the leftmost part of the figure. It will be appreciated that the numerical values in the Fig. 9 example are provided by way of example and without limitation.

In order to maximize cache efficiency, the chain is stored as a very lightweight object (which takes very little space in memory), and includes three information elements, namely, the length, the match size, and the distortion sum (which is the sum of distortions of all blocks it references). So from this "lightweight chain" only, certain example embodiments cannot identify the blocks it references. In certain example embodiments, such information is kept in separate buffers. By using indexing, it becomes possible to reference data. For instance, the following indexing procedure may be implemented in certain example embodiments:

- Given the index position of a chain in the chain buffer, the list of paired information (e.g., in the form of (block index, encoding configuration index) for example) it references can be accessed.
- Given an encoding configuration index, its distortion value can be accessed.
- Given a block index, the block status ("Set" or "Unset") can be accessed.
- Given a block index, the list of chains it is involved in can be accessed.

These four links allow the Fig. 9 procedure to be implemented in certain example embodiments.

Finally, if the procedure ends without all blocks being in the "Set" state, certain example embodiments apply for each of these remaining blocks the encoding configuration having a distortion of 0. Such an encoding configuration always exists as is detailed in the next section, and it corresponds to the best quality configuration that is present for the block. Note that doing this could be also seen as applying fictitious chains composed of one block only, which would have a distortion of 0 but also a rate of 0 (because for rate to be non-zero the chain must reference at least two blocks); therefore, such a fictitious chain would have a cost of 0, which is the highest cost the RDO can consider.

Example Rate and Distortion Discussion

Rate and distortion have been discussed above. To measure quality, a metric is used. Possible metrics that may be used in connection with certain example embodiments include, for example: SSD (Sum of Squares Difference) in a given Color Space (RGB, YUV, CieLab, OkLab, etc.); some variant of SSD, e.g., aiming to mitigate blockiness artifacts, which may include (1) weighted SSD, which gives more weights to the pixels on the block's frontiers, or (2) SSD normalized by the pixels' variance (where noisy blocks can often be altered more aggressively than others, because this will be less noticeable); Angular SSD for normal maps ; SSIM (Structural Similarity) ; and/or the like.

Certain example embodiments measure quality at the level of texture blocks, thereby obtaining a value that measures the quality of a specific texture block. In certain example embodiments, the quality metric includes more than the pixels for a given block. For example, it also can include the pixels surrounding the block (e.g., using the spatial context of the block). The quality metric is additive, in the sense that the quality measure for a group of texture blocks is equal to the sum of the quality measure for each block in the group, or at least can be approximated in this way.

The distortion is a measure of quality loss, so it actually measures the quality of a texture block relative to a reference. The reference in certain example embodiments is the best possible quality that can be obtain for a given block among all encoding configurations available have for that block. In other words, if $Q$ is the quality metric used, and $q_{i,j}$ is the value with this metric for block i with encoding configuration j (or $e_{i,j}$), then the distortion will be computed as $d_{i,j} = q_{i,j} - Min_j(q_{i,j})$. This formula implies that for a given block, distortion is a positive value and the best encoding configuration will have a distortion of 0, which is desirable.

Rate is how much storage size that is expected to be saved, and it can be more difficult to obtain because (unlike distortion) it cannot be computed directly and therefore is estimated in some instances. Indeed, it can be challenging to predict how lossless compressors will react to a change in the texture bitstream because this depends on many things that are often internal to the compressor itself, so it may not be known how a match chain would actually save. Example techniques for estimating the storage gain include a closed-form approach and a model-based approach, e.g., as discussed in greater detail below.

Example Closed-Form Approach to Estimating Rate

Certain example embodiments attempt to model the storage gain using a function. This has the advantage of being very fast to evaluate. One function that can be used is:

$$R(Length, MatchSize)$$
$$= Max(0, (Length - 1) * (MatchSize - MIN\_MATCH\_SIZE + 1)$$

As discussed above, length and match size are attributes of a match chain: If there are six duplicated chunks of 5 bytes in the texture, then there is a match chain whose length is 6 and (match) size 5. Thus, assuming MIN_MATCH_SIZE is 4, then the rate of this match chain given by the formula above is R = 10.

This function also has properties that can be expected for rate, which include:

- For MatchSize strictly smaller than MIN_MATCH_SIZE or for Length < 2, R = 0;
- R is an increasing function with respect to Length; and
- R is an increasing function with respect to MatchSize.

Example Model-Based Approach to Estimating Rate

Instead of using an explicit formula for computing the rate, certain example embodiments can attempt to estimate it from a simplified model of the lossless compressor. There are many ways of approximating the compressor's performance. One approach that can be used in certain example embodiments is to try to estimate independently the rate for each possible match chain that can be considered by the algorithm. Assume, for instance, that there is a desire to have an estimate of how much a 4-byte match chain of length 3 save (i.e., a chunk of 4 bytes repeating itself 3 times). It is known that matches will be performed within a slice of given size (see the Texture Slicing section above). It is possible to "simulate" how much this specific match chain will save by running the following experiment many times:

1. Generate a random buffer of data, of size the texture slice size that is being considering (e.g., a slice of 4,096 ASTC blocks means a buffer of 65,536 bytes).
2. Put the slice in a given "compressibility state." The goal is to modify the random data in the buffer in order to create matches so that the buffer reaches a certain compression level (when compressed with the lossless compressor). That is, matches are randomly created in the buffer until the required compression level (e.g., 60% of the uncompressed buffer size) is reached.
3. Perform another match in the buffer using the match chain being targeted (which in the example means a 4-byte match of length 3), making sure to not overwrite existing matches created at the previous step.
4. Compress the buffer with the lossless compressor. Compute the difference between the obtained compressed size and the compressed size from 2. This provides an estimate of how much storage size the match chain has saved.

5. Repeat the "experiment" many times (e.g., from 1-4 times), randomizing at each iteration the initial buffer content (1), the compression level, as well as the types of matches we have inserted to reach that level (2), and the location in the buffer of the match chain whose rate has to be estimated (3). The rate estimation is then given by the average of all estimates from 4.

The above procedure will be performed for all types of chains that possibly can be run with the algorithm. For example, if MIN_MATCH_SIZE is set to 4 and MAX_MATCH_SIZE is set to 8, using a texture slice of 40,96 blocks, there are (8 - 5 + 1) * (4,096 - 1) = 20,475 types of chains for which the rate potentially should be estimates. This procedure can be done "offline" (e.g., outside of the algorithm execution), and the result of all rate estimates can be stored (e.g., in an array) that can be accessed during algorithm execution for example.

Example Techniques for Controlling Memory Usage

Example Texture Slicing Techniques

As discussed above, stage 2 of the algorithm of certain example embodiments extracts chunks from encoding configurations. For a large texture size, this may result in a memory consumption that is too high and hence impractical. For instance, taking the ASTC format and a 1,024x1,024 texture with 1,024 encoding configurations per block, computing the combinatory of Stage 2 yields almost one billion extracted chunks.

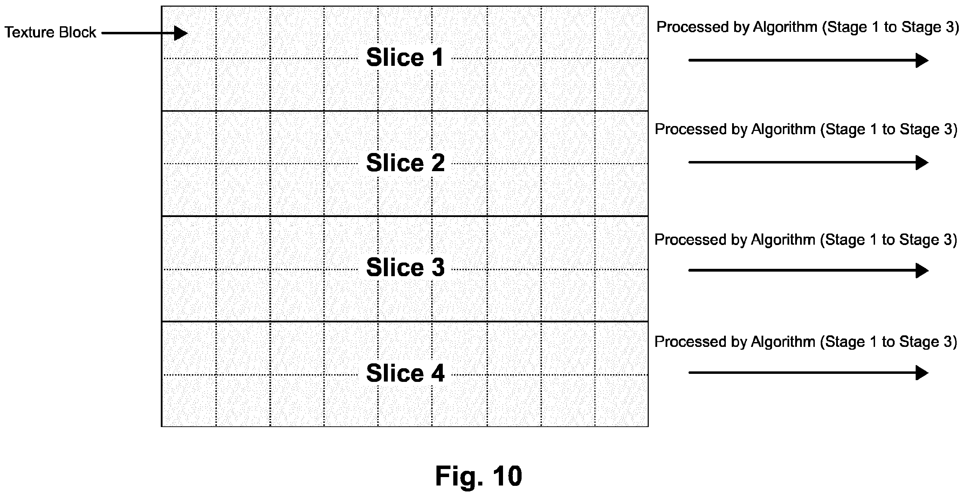

To help address this issue, certain example embodiments split the textures into slices, e.g., containing a given number of blocks. Each slice is processed independently by the algorithm of certain example embodiments. Fig. 10 schematically shows a texture split into 4 slices in accordance with the texture slicing approach of certain example embodiments.

Typical slice sizes range from 1,024 to 4,096 blocks in certain example embodiments. Choosing the right slice size is correlated with choosing the right number of encoding configurations per block, because both strongly influence memory usage and processing time, which are desirable to maintain at a controlled level. One may want to favor larger slice sizes and fewer encoding configurations or, conversely, smaller slices but with more encoding configurations. Such parameters may be determined empirically depending on the constraints (e.g., memory and processing time budget), but also on the behavior of the algorithm itself using these parameters (including the compression level and the texture quality that is reached).

Discarding Match Chains in Certain Example Embodiments

There may be early chain rejections in some cases, e.g., cases where it is known in advance that some chains can be discarded (and hence not stored), because they will never be considered by stage 4 of the algorithm of certain example embodiments. This means that such chains are always suboptimal, regardless of whatever smaller chains into which they may break down. In other words, there always exists a match chain that is better than this one. In stage 3, one such situation was described. That is, some chains are suboptimal because they had an identical rate as another while having a worse distortion, and the description above showed that these chains do not need to be stored, because the optimal chains considered would naturally break down to them if they would become optimal.

Similarly, a chain can have the same distortion as another while having a worse rate.

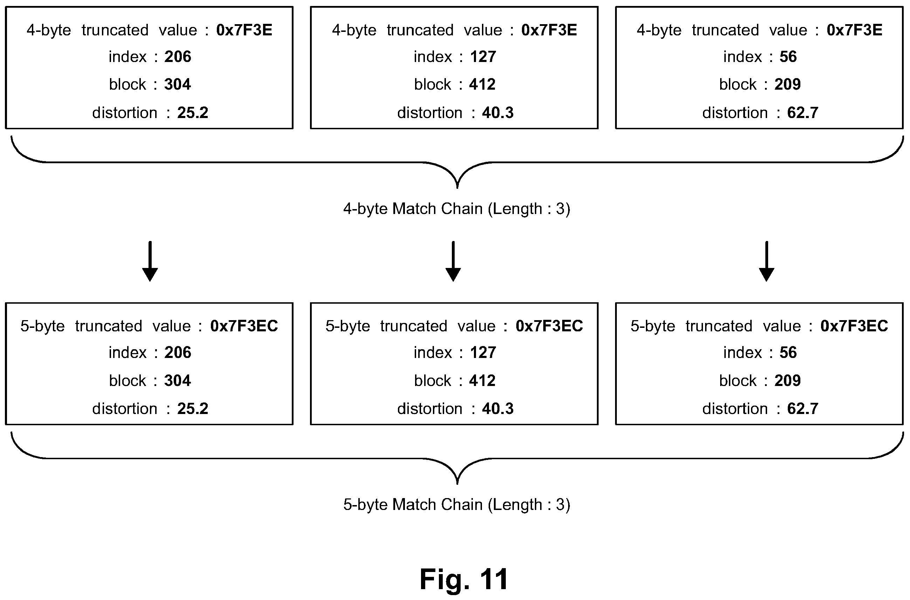

Fig. 11 helps illustrate when a match chain may be discarded in connection with certain example embodiments. Fig. 11 represents a supposedly optimal chain of length 3. An example distortion of each referenced blocks is provided for illustrative purposes. When moving to upper match size (5 bytes), all of the chunks composing the chain also collide on 5 bytes. Therefore, even though the 4-byte chain might have been identified as a potentially optimal chain in stage 3 of the algorithm of certain example embodiments, it need not be stored because it will never be considered in stage 4 of the algorithm of certain example embodiments. Indeed, whatever the smaller chains it would break down to, it would always be a suboptimal chain because the upper size chain will also break down to the same smaller chains, and they will have a greater match size (5 bytes here), and hence a better rate, while having the same distortion. In a nutshell, in Fig. 11, a first match chain with a match size of 4 and a length of size 3 is "beaten" by a second match chain with a match size of 5 and a length of size 3.

Additional Details Concerning Discarding Match Chains

There are further optimizations that may allow for the discarding of many chains. For example, after stage 1 of the algorithm of certain example embodiments, there are many encoding configurations for each block. It has been observed that some distortion values are such that a determination can already be made that any chain referencing these encoding configurations will never be considered by stage 4 of the algorithm of certain example embodiments.

To see this, consider a chain of length N. Its cost per block is:

$$C_{block,N} = \frac{\sum_{i=1}^{N} d_i - \lambda R_N}{N}$$

where $d_i$ is the distortion of the ith block referenced in the chain, and $R_N$ is the rate. The subscript N is used here to indicate that the rate depends, among other things, on the chain length. Assume that distortions are sorted by increasing value:

$$d_1 \leq d_2 \leq \cdots \leq d_N$$

Now, consider adding another block to this chain, with distortion $d_{N+1}$, which gives a new cost value $C_{block,N+1}$. Considering the numerator of this cost is:

$$\sum_{i=1}^{N+1} d_i - \lambda R_{N+1} = \sum_{i=1}^{N} d_i - \lambda R_N + \lambda R_N - \lambda R_{N+1} + d_{N+1}$$

$R_{N+1}$ - $R_N$ is the incremental rate, which corresponds to the additional storage gain by extending the length-N chain to a length-N+1 chain. Assume a majorant is known for this value $\Delta R_{max}$. Then:

$$\sum_{i=1}^{N+1} d_i - \lambda R_{N+1} \geq \sum_{i=1}^{N} d_i - \lambda R_N - \lambda \Delta R_{max} + d_{N+1}$$

Therefore, if $d_{N+1} > \lambda \Delta R_{max}$:

$$\sum_{i=1}^{N+1} d_i - \lambda R_{N+1} > \sum_{i=1}^{N} d_i - \lambda R_N$$

Two cases can happen:

- First, $\sum_{i=1}^{N} d_i - \lambda R_N \geq 0$ : This means that the length-N chain has a positive cost and therefore is not interesting to apply. But then as per the inequality, the cost of length-N+1 chain is also positive, therefore it is not interesting either.

- Second, $\sum_{i=1}^{N} d_i - \lambda R_N < 0$ : The length-N chain is applicable. For the length-N+1 chain to be applicable, $\sum_{i=1}^{N+1} d_i - \lambda R_{N+1} < 0$. Dividing the inequality above by N, yields: $\frac{\sum_{i=1}^{N+1} d_i - \lambda R_{N+1}}{N} > \frac{\sum_{i=1}^{N} d_i - \lambda R_N}{N}$. But also: $0 > \frac{\sum_{i=1}^{N+1} d_i - \lambda R_{N+1}}{N+1} > \frac{\sum_{i=1}^{N+1} d_i - \lambda R_{N+1}}{N}$ Hence, $0 > \frac{\sum_{i=1}^{N+1} d_i - \lambda R_{N+1}}{N+1} > \frac{\sum_{i=1}^{N} d_i - \lambda R_N}{N}$. In other words, $0 > C_{block,N+1} > C_{block,N}$.

In the first case, the length-N+1 chain has a positive cost, and in the second case, it is beaten by the length-N chain because it has a higher cost, so there is a suboptimal chain. Therefore, when encoding configurations are such that $d_i > \lambda \Delta R_{max}$ any chain referencing such encoding configuration will be a suboptimal chain. But being suboptimal is not a sufficient criterion for rejection in certain example embodiments. Certain example embodiments ensure that such chain can never be chosen at stage 4 of the algorithm in order to be able to discard it. In other words, certain example embodiments check that it would always stay a suboptimal chain. Because of the two conditions $0 > C_{blockN+1} > C_{block,N}$

and $d_{N+1} > \lambda \Delta R_{max}$, the length-N+1 chain (or what remains from it) will never be optimal, and hence will never been applied. The reason is that as long as it remains, at least two blocks in the length-N chain, $0 > C_{block,N+1} > C_{block,N}$ will always hold, so the length-N chain would be desirable compared to the N+1 one. When the length-N chain only has one block remaining (and so becomes not applicable), it can be seen that the length-N+1 chain (which has now become a length-2 chain) has a positive cost. Assume for example only block 1 remains in length-N chain. Then the cost of the length-N+1 chain is:

$$C_{block,N+1} = C_{block,2} = \frac{d_1 + d_{N+1} - \lambda R_2}{2} > \frac{d_1 + \lambda \Delta R_{max} - \lambda R_2}{2} \geq \frac{d_1}{2} \geq 0$$

(because $\lambda R_2 = \lambda(R_2 - R_1) \leq \lambda \Delta R_{max}$ as $R_1$ equals 0).

Therefore, length-N+1 chain is not "interesting" and can be discarded.

Example Lambda Factorization Related Techniques

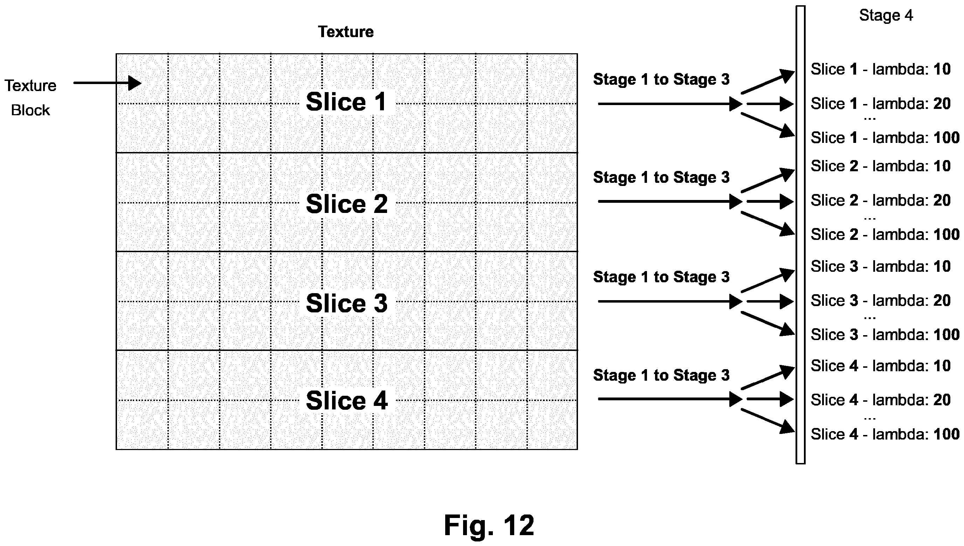

As discussed above, the algorithm of certain example embodiments can be factorized. Moreover, the use of the hyperparameter was mentioned in stage 4. Thus, it becomes possible to output different versions of the encoded texture, e.g., corresponding to different tradeoffs between rate and distortion, by performing stages 1-3 only once. In such cases, only stage 4 would be executed several times. Fig. 12 shows an example of algorithm factorization in accordance with certain example embodiments. Eleven hyperparameter values are sent to the algorithm, from 0 to 100 with a step of 10. As can be seen, stage 1 to stage 3 are performed only once per slice, in the same way as described above. Only stage 4 is executed as many times as there are inputs to the process, with an input being a specific slice with a specific lambda value, which gives us a count of 11 * 4 = 44 executions of stage 4. Because each of these executions can be entirely parallelized, such structure allows for efficient multithreading in certain example embodiments.

As discussed in the foregoing sub-section, an optimization that can be applied after stage 1 of the algorithm of certain example embodiments in order to avoid inserting many chains involves discarding the chains referencing encoding configurations having a distortion above a certain threshold: $\lambda \Delta R_{max}$. This threshold depends on the value of lambda, which could contradict the notion that stages 1-3 of the algorithm do not depending on lambda. However, this can be handled by changing the threshold value and making it lambda-independent, e.g., taking as a new threshold $\lambda_{max}\Delta R_{max}$.

Example Development and Runtime Pipelines

From a developer's perspective (e.g., from the perspective of someone who might be designing or implementing a part of a virtual environment, e.g., for use in a game world), the algorithmic techniques disclosed herein may be provided in connection with a development tool. The tool may be a software program running on a computing system including at least one hardware processor operably coupled to a memory. The tool may comprise a user interface through which a user interacts with the software program. A data store local to or remote from the computing system accessing the software program stores a library of textures that are to be compressed.

Using the tool, the developer selects one or more textures to be compressed, and specifies one or more target lossy formats, e.g., from a list of possible lossy formats such as, for example, the lossy formats identified above (e.g., BC1, BC3, BC4, BC5, BC7 and ASTC). The developer decides whether to apply RDO and, if so, one or more RDO lambda values are specified.

The encodings are generated for the selected one or more textures using the specified parameters. It will be appreciated that it is possible to perform multiple encodings efficiently, e.g., as discussed above. Once the encodings are completed, the developer can compare quality and size. Quality may be specified using a programmed or selected metric (e.g., PSNR, SSD, SSIM, or the like). Size may be represented as an absolute size, as a percentage of the original size, and/or the like.

The tool may display the original texture adjacent to encoded textures in the user interface, e.g., for a visual comparison. Hovering a cursor, such as a mouse pointer, over the encoded textures may provide summary details such as, for example, the encoder used, whether RDO was applied, quality, size, rankings of quality and/or size if multiple encodings were specified, etc. Other details of the encoding configuration chosen by the texture encoders for each block (such as, for example, partition index, weight values, color endpoints, etc.) also may be displayed. Providing this kind of information is useful for comparing, reviewing, and analyzing encoding configurations.

The developer can select a particular encoding for deployment, or a particular encoding can be selected automatically (e.g., based on the best tradeoff or other programmed set of rules). The compressed textures then may be packaged for deployment.

Runtime refers to decoding. The decoder applies the lossless decompression (if applicable). The lossy-encoded texture is then fed to a GPU in certain example embodiments. The GPU will then handle the lossy decoding and rendering, e.g., in presenting the virtual environment.

Summary of Encoder and Decoder Related Techniques

Many features and aspects of the disclosed technology are set forth above. The following descriptions provide a summary of certain encoder and decoder related techniques. The following simply highlights some features of certain example embodiments and therefore should not be interpreted as limiting all embodiments, the scope of the claimed invention being expressly set forth in the claims.

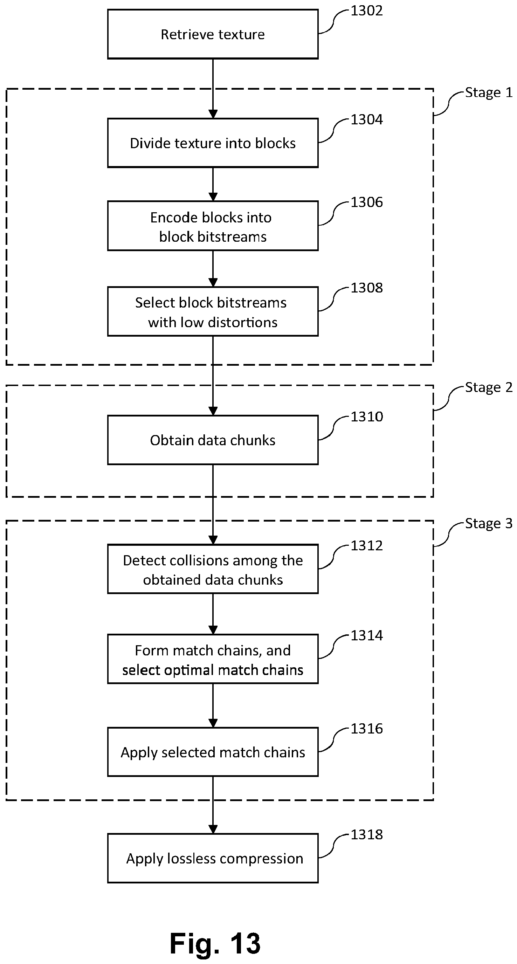

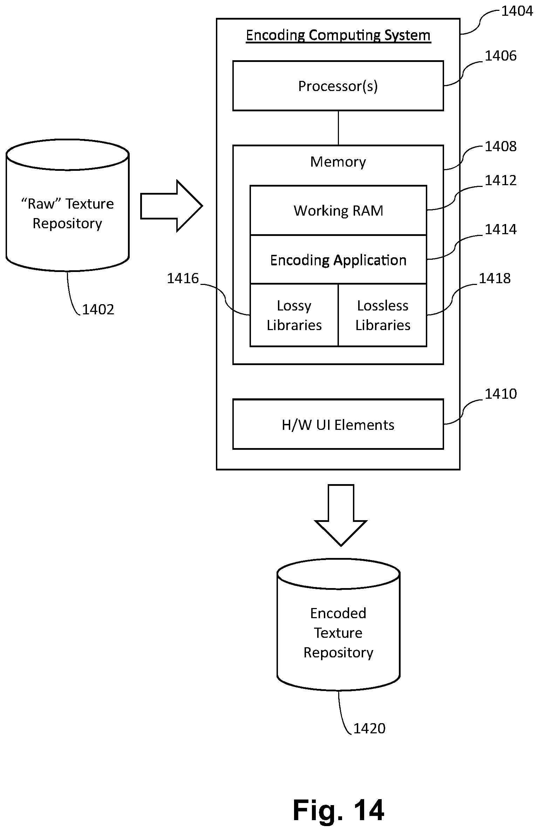

Referring first to the encoder, Fig. 13 is a flowchart showing a process for generating encoded textures in accordance with certain example embodiments; and Fig. 14 is a block diagram showing a computing architecture that may be used in connection with the Fig. 13 example flowchart, in accordance with certain example embodiments.

Fig. 13 shows the three-stage notional breakdown discussed in detail above including, for example, stage 1 (multi-configuration texture encoding), stage 2 (chunk extraction), and stage 3 (match chain creation). Fig. 13 begins in step 1302 with the texture being retrieved from a raw texture repository 1402 via an encoding computing system 1404. The raw texture repository 1402 may be local to or remote from the encoding computing system 1404 in different example embodiments. In the case of the latter, raw textures (textures to be encoded) may be retrieved over a suitable network connection such as the Internet, via API calls, etc. The computing system 1404 may include one or more computers in a standalone, client-server network, distributed computing (e.g., cloud computing), or other technology environment. Network and distributed computing environments may be advantageous in certain example embodiments because encode operations may be parallelized, as discussed above. The encoding computing system 1404 includes at least one processor 1406 operably coupled to a memory 1408, as well as hardware user interface elements 1410. The memory 1408 includes a working area (e.g., working RAM 1412) as well as an encoding application 1414. A user uses the hardware user interface elements 1410 (e.g., a keyboard, mouse, touchscreen, etc.) to interface with the encoding application 1414 to work with the encoding application 1414, e.g., to indicate which textures to compress, indicate lossy and/or lossless encodings to be used (e.g., based on those available from the lossy libraries 1416 and the lossless libraries 1418), specify the hyperparameter, monitor the output of encode operations, etc.

Once a raw texture to be encoded is retrieved, the encoding application 1414 divides the texture into a plurality of blocks (e.g., of a predetermined pixel size) in step 1304. In step 1306, each of these blocks is encoded into a plurality of block bitstreams. In doing so, each of these block bitstreams is encoded in accordance with an encoding configuration (based in part on the lossy encoding), and each block bitstream / encoding configuration will have an associated distortion value. In step 1308, the block bitstreams having the lowest associated distortion values are selected for each of the respective blocks such that up to a predetermined number of distinct block bitstreams are selected. It is noted that the blocks, buffers, and/or other data structures used in the operations represented in Fig. 14 may be stored in the memory 1408 (e.g., in the working RAM 1412) in certain example embodiments.

In certain example embodiments, as many distinct block bitstreams as possible (e.g., up to a user-specified predetermined number) will be selected, and an indicator may be provided for each block for which the number of selected block bitstreams is less than the predetermined number. In addition, or in the alterative, certain example embodiments may allow input to be received so that a maximum distortion value for one or more specified blocks in the plurality of blocks can be specified. In such cases, for each of these specified blocks, only those block bitstreams having distortion values better than the maximum distortion value will be selectable for the respective specified block.

Data chunks are obtained in step 1310. This involves extracting at least some data chunks. In certain example embodiments, only some data chunks will be extracted directly from the blocks; in such cases, other chunks may be generated from those that are directly (or at least more directly) extracted from the blocks. Thus, in certain example embodiments, the obtaining of the data chunks may comprise extracting a subset of valid data chunks for a given selected block bitstream, and generating the remaining data chunks for the given selected block bitstream from the extracted subset (e.g., via masking).

In any event, for each block bitstream selected as having a low distortion, a plurality of data chunks are obtained such that each data chunk is a contiguous section of the respective selected block bitstream from which it is obtained. The data chunks for the respective selected block bitstream start from each position (e.g., each byte) of the respective selected block bitstream and span until the end of the of the respective selected block bitstream such that the respective data chunk has a minimum data chunk size. Data chunks of different sizes are obtainable for the selected bitstreams in certain example embodiments. In certain example embodiments, the minimum data chunk size may be at least as large as a minimum size usable by the lossless compressor that ultimately is used.

Collisions among the obtained data chunks are detected (e.g., using efficient sorting approaches, and by eliminating non-extensible, non-colliding, and/or duplicate colliding data chunks from higher distortion block bitstreams) in step 1312. Based on the detected collisions, match chains with redundant data chunks are formed in step 1314 such that, for each match chain, the redundant data chunks therein represent a common truncated value of an associated block bitstream.

During the match chain creation process, many of the match chains candidates (potential match chains) are filtered out, discarded, or otherwise not considered, as they are known in advance to be not selectable in the subsequent iterative selection procedure, because for each of these discarded match chains, it has been detected that there always exists at least another equal or better match chain. In other words, a given match chain is not considered in response to a determination that there is or will be another match chain formed that is equal to or better than the given match chain. "Better" in this context should be understood as having a better cost obtained via a cost function involving the hyperparameter.

The match chains having the best values from among the formed match chains that remain are iteratively selected. In certain example embodiments, the "best value" may be determined in connection with a function related to a hyperparameter, e.g., with the hyperparameter trading off rate and distortion. That is, in certain example embodiments, the hyperparameter trades off rate and distortion and is a part of a defined function that determines which match chains are best.

A lossy encoding of the texture is obtained using the iteratively selected match chains, in step 1316, and the encoded lossy texture is further encoded using a lossless compressor in step 1318. The "final" encoded texture is sent to the encoded texture repository 1420, which again may be collocated with or remote from the encoding computing system 1404 in different example embodiments. These textures may be used in defining a virtual environment such as, for example, a video game or the like.

It will be appreciated that some or all of the operations described in connection with Fig. 13 may be performed using the encoding application 1414, e.g., based on user input obtained via the hardware user interface elements 1410. The encoding application 1414 may be implemented as instructions executable by the processor(s) 1406 in a series of program modules or other structures.

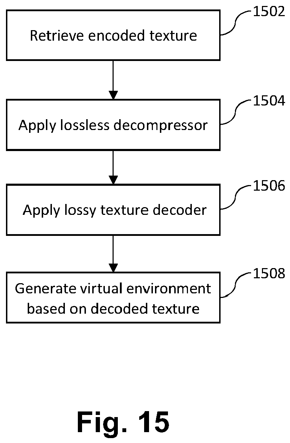

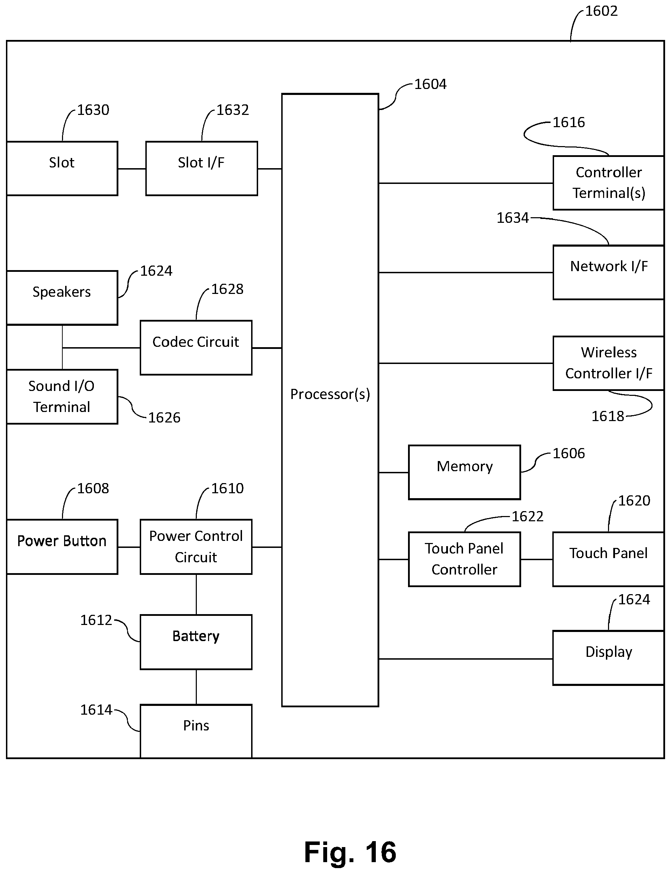

Fig. 15 is a flowchart showing a process for decoding textures encoded via the techniques described herein, in accordance with certain example embodiments. As shown in Fig. 15, an encoded texture is retrieved in step 1502. The encoded texture may be retrieved as a part of a virtual environment (or portion of a virtual environment) being rendered on a computing device such as that shown in and described in connection with Fig. 16, as a part of a virtual tour (e.g., of a home, museum, etc.), and/or in other scenarios. The texture may be included in an application, retrieved from a local or remote data store, and/or the like. Once the texture is retrieved, it is provided to the lossless decompressor in step 1504 and that output is provided to the lossy texture decoder 1506. These decoders may be implemented in software and/or in connection with features provided by a processor such as a CPU, GPU, and/or the like. In certain example embodiments, the retrieved texture simply may be passed to a GPU for decoding and rendering. In any event, the virtual environment is generated in step 1508 based on the decoded texture. The output may be provided to a display device (e.g., a LCD, LED, OLED, or other display device) operably connected to the computing device.

Fig. 16 is a block diagram showing a computing device 1602 that may be used in connection with the Fig. 15 example flowchart, in accordance with certain example embodiments. This computing device 1602 may be a game device such as a portable game device, a console gaming device, and/or the like. Alternatively, the computing device 1602 may be a television, personal computer, laptop, mobile electronic device, or other type of electronic device. As will be appreciated by those skilled in the art, some or all of the blocks shown in Fig. 16 may be provided or omitted in different implementations, e.g., depending on the type of electronic device provided.

As shown in Fig. 16, the computing device 1602 includes one or more processors 1604 operably connected to a memory 1606. The one or more processors 1604 may include CPU, GPU, and/or other processors located in a common device, across several devices (e.g., in a network environment), etc. The memory may include media such as, for example, an SSD, HDD, flash memory, RAM, DRAM, and/or the like.

The device 1602 can be turned on using a power button 1608 that is connected to a power control circuit 1610. The power control circuit 1610 in turn is connected to a battery 1612 (e.g., a rechargeable battery). The device 1602 can be powered with pins 1614, and pins 1614 additionally can be used to charge the battery 1612 when it is rechargeable.

A user can interact with the computing device 1602 via a controller coupled thereto. The controller may be integral with the device in certain example embodiments. In certain example embodiments, a separate controller may be connectable to the computing device via controller terminals 1616 and/or a wireless controller interface 1618 (e.g., operating over a wireless protocol like Bluetooth or the like). In certain example embodiments, the controller may include game system type controls like buttons, a cross switch, joystick, slide pad, and/or the like. In certain example embodiments, the controller may include a keyboard, mouse, trackball, and/or the like. In certain example embodiments, a user may interact with the device 1602 via a touch panel 1620 that interfaces with the device 1602 in connection with a touch panel controller 1622. Video output is provided to a display 1624 that is integral with or otherwise connectable to the device 1602. Sound is provided via integral speakers 1624 and/or through an audio jack or other terminal 1626, which connect with the processor(s) 1604 via a codec circuit 1628.

The slot 1630 receives physical media such as, for example, an SD card, a micro SD card, a CD-ROM, a DVD-ROM, and/or the like. A slot interface 1632 provides a connection between the slot 1630 and the processor(s) 1604. In certain example embodiments, the media inserted into the slot 1630 may include the program that includes or otherwise accesses the compressed textures that are to be displayed. In certain example embodiments, the program that includes or otherwise accesses the compressed textures that are to be displayed may be retrieved via a network interface 1634, e.g., in connection with a game that is downloaded, a cloud gaming scenario, etc.

Although one example gaming system is shown, it will be appreciated that the techniques disclosed herein may be used in connection with other game system and, indeed, other electronic devices that are not dedicated gaming systems (such as, for example, PCs, TVs, mobile devices like smartphone, etc.).

In certain example embodiments, a method of encoding a texture is provided. The method comprises: retrieving the texture from a data store; dividing the texture into a plurality of blocks; encoding each of the blocks into a plurality of block bitstreams, each of the block bitstreams corresponding to a respective encoding configuration and having a distortion value associated therewith; for each block, selecting the block bitstreams having the lowest associated distortion values for the respective block such that up to a predetermined number of distinct block bitstreams are selected; for each selected block bitstream, obtaining a plurality of data chunks such that each data chunk is a contiguous section of the respective selected block bitstream from which it is obtained, the data chunks for the respective selected block bitstream starting from each position of the respective selected block bitstream and spanning until the end of the of the respective selected block bitstream such that the respective data chunk has a minimum data chunk size, wherein data chunks of different sizes are obtainable for the selected bitstreams; detecting collisions among the obtained data chunks; based on the detected collisions, forming match chains with redundant data chunks such that, for each match chain, the redundant data chunks therein represent a common truncated value of an associated block bitstream; and iteratively selecting the best match chains from among the formed match chains, the best match chains being determined using a hyperparameter; and obtaining a lossy encoding of the texture from the iteratively selected best match chains.

In addition to the features of the previous paragraph, in certain example embodiments, the data chunks may start from different byte locations.

In addition to the features of either of the two previous paragraphs, in certain example embodiments, for each block, as many distinct block bitstreams as possible, up to the predetermined number, may be selected; and the method may further comprise providing an indicator for each block for which the number of selected block bitstreams is less than the predetermined number.

In addition to the features of any of the three previous paragraphs, in certain example embodiments, input specifying a maximum distortion value for one or more specified blocks in the plurality of blocks may be received; and for each of the one or more specified blocks, only those block bitstreams having distortion values better than the maximum distortion value may be selectable for the respective specified block.

In addition to the features of any of the four previous paragraphs, in certain example embodiments, the minimum data chunk size may be at least as large as a minimum size usable by a lossless compressor to which the lossy encoding of the texture is to be applied.

In addition to the features of any of the five previous paragraphs, in certain example embodiments, the obtaining of the data chunks may comprise: extracting a subset of valid data chunks for a given selected block bitstream; and generating the remaining data chunks for the given selected block bitstream from the extracted subset.

In addition to the features of any of the six previous paragraphs, in certain example embodiments, the hyperparameter may trade off rate and distortion and may be a part of a defined function that determines which match chains are best.

In addition to the features of any of the seven previous paragraphs, in certain example embodiments, the texture may be divided into slices each including a predetermined number of blocks, and the slices may be treated as individual textures to be separately divided into blocks.

In addition to the features of any of the eight previous paragraphs, in certain example embodiments, match chains that are determined to be not selectable in the iterative selection may not be considered for the formation of the match chains.

In addition to the features of the previous paragraph, in certain example embodiments, a given match chain may be discarded in response to a determination that there is or will be another match chain formed that is equal to or better than the given match chain.

In addition to the features of the previous paragraph, in certain example embodiments, application of a function involving the hyperparameter to the match chains may enable different match chains to be compared to one another.

In addition to the features of any of the 11 previous paragraphs, in certain example embodiments, the iterative selection may select the best match chains.

In addition to the features of any of the 12 previous paragraphs, in certain example embodiments, the lossy encoded texture may be encoded using a lossless compressor.

In certain example embodiments, a method of encoding a texture is provided. The method comprises: encoding each of a plurality of blocks into which the texture has been divided into a plurality of block bitstreams, each of the block bitstreams corresponding to a respective encoding configuration and having a distortion value associated therewith; for each block, selecting the block bitstreams having the lowest associated distortion values for the respective block such that up to a predetermined number of distinct block bitstreams are selected; for each selected block bitstream, obtaining a plurality of data chunks such that each data chunk is a contiguous section of the respective selected block bitstream from which it is obtained, wherein data chunks of different sizes are obtainable for the selected bitstreams; detecting collisions among the obtained data chunks; based on the detected collisions, forming match chains with redundant data chunks such that, for each match chain, the redundant data chunks therein represent a common value of an associated block bitstream; and selecting the best match chains from among the formed match chains, the best match chains being determined using a hyperparameter; and obtaining a lossy encoding of the texture from the selected best match chains.

In addition to the features of the previous paragraph, in certain example embodiments, the data chunks may start from different byte locations.

In addition to the features of either of the two previous paragraphs, in certain example embodiments, for each block, as many distinct block bitstreams as possible, up to the predetermined number, may be selected; and the method may further comprise providing an indicator for each block for which the number of selected block bitstreams is less than the predetermined number.

In addition to the features of any of the three previous paragraphs, in certain example embodiments, input specifying a maximum distortion value for one or more specified blocks in the plurality of blocks may be received, and for each of the one or more specified blocks, only those block bitstreams having distortion values better than the maximum distortion value may be selectable for the respective specified block.

In addition to the features of any of the four previous paragraphs, in certain example embodiments, the obtaining of the data chunks may comprise: extracting a subset of valid data chunks for a given selected block bitstream; and generating the remaining data chunks for the given selected block bitstream from the extracted subset.

In addition to the features of any of the five previous paragraphs, in certain example embodiments, for each selected block bitstream, in the obtaining of the plurality of data chunks, the data chunks for the respective selected block bitstream may start from each position of the respective selected block bitstream and may span until the end of the of the respective selected block bitstream such that the respective data chunk has a minimum data chunk size.

In addition to the features of any of the six previous paragraphs, in certain example embodiments, the texture may be divided into slices each including a predetermined number of blocks, and the slices may be treated as individual textures to be separately divided into blocks.

In addition to the features of any of the seven previous paragraphs, in certain example embodiments, match chains that are determined to be not selectable in the iterative selection may not be considered for the formation of the match chains.

In addition to the features of the previous paragraph, in certain example embodiments, a given match chain may be discarded in response to a determination that there is or will be another match chain formed that is equal to or better than the given match chain.

In addition to the features of any of the nine previous paragraphs, in certain example embodiments, the hyperparameter may trade off rate and distortion and may a part of a defined function that determines which match chains are best.

In addition to the features of any of the ten previous paragraphs, in certain example embodiments, the lossy encoded texture may be encoded using a lossless compressor.

In certain example embodiments, there is provided a method of providing a virtual environment in connection with a computing system. The method comprises: retrieving an encoded texture from a non-transitory computer readable storage medium, the texture having been encoded using the method of any of the 24 previous paragraphs; and providing the encoded texture to at least one processor of the computing system for decoding of the texture and use of the decoded texture in the virtual environment. Similarly, in certain example embodiments, there is provided a computing system via which a virtual environment is displayable. The system includes a memory coupled to one or more processors configured to perform operations comprising: retrieving an encoded texture from a non-transitory computer readable storage medium, the texture having been encoded using the method of any of the 24 previous paragraphs; and providing the encoded texture to at least one of the one or more processors of the computing system for decoding of the texture and use of the decoded texture in the virtual environment.

In certain example embodiments, there is provided a non-transitory computer readable storage medium storing instructions that, when executed by a processor, cause a computer to perform operations corresponding to the method of any of the 25 previous paragraphs.

In certain example embodiments, a texture encoding system is provided. A data store stores a texture. A memory and at least one processor are configured to perform operations comprising: retrieving the texture from a data store; dividing the texture into a plurality of blocks; encoding each of the blocks into a plurality of block bitstreams, each of the block bitstreams corresponding to a respective encoding configuration and having a distortion value associated therewith; for each block, selecting the block bitstreams having the lowest associated distortion values for the respective block such that up to a predetermined number of distinct block bitstreams are selected; for each selected block bitstream, obtaining a plurality of data chunks such that each data chunk is a contiguous section of the respective selected block bitstream from which it is obtained, the data chunks for the respective selected block bitstream starting from each position of the respective selected block bitstream and spanning until the end of the of the respective selected block bitstream such that the respective data chunk has a minimum data chunk size, wherein data chunks of different sizes are obtainable for the selected bitstreams; detecting collisions among the obtained data chunks; based on the detected collisions, forming match chains with redundant data chunks such that, for each match chain, the redundant data chunks therein represent a common truncated value of an associated block bitstream; iteratively selecting the best match chains from among the formed match chains, the best match chains being determined using a hyperparameter; and obtaining a lossy encoding of the texture from the iteratively selected best match chains.

In addition to the features of the previous paragraph, in certain example embodiments, for each block, as many distinct block bitstreams as possible, up to the predetermined number, may be selected; and an indicator may be provided for each block for which the number of selected block bitstreams is less than the predetermined number.

In addition to the features of either of the two previous paragraphs, in certain example embodiments, a user interface may be configured to receive input specifying a maximum distortion value for one or more specified blocks in the plurality of blocks, and for each of the one or more specified blocks, only those block bitstreams having distortion values better than the maximum distortion value may be selectable for the respective specified block.

In addition to the features of any of the three previous paragraphs, in certain example embodiments, the obtaining of the data chunks may comprise: extracting a subset of valid data chunks for a given selected block bitstream; and generating the remaining data chunks for the given selected block bitstream from the extracted subset.

In addition to the features of any of the four previous paragraphs, in certain example embodiments, the at least one processor may be configured to perform operations further comprising encoding the lossy encoded texture using a lossless compressor.

In certain example embodiments, a method of encoding a texture is provided. The method includes encoding each of a plurality of blocks into which the texture has been divided into a plurality of block bitstreams; for each block, selecting up to a predetermined number of distinct block bitstreams; for each selected block bitstream, obtaining a plurality of data chunks such that each data chunk is a contiguous section of the respective selected block bitstream from which it is obtained; detecting collisions among the obtained data chunks; based on the detected collisions, forming match chains with redundant data chunks such that, for each match chain, the redundant data chunks therein represent a common value of an associated block bitstream; iteratively selecting a set of match chains from among the formed match chains based on a hyperparameter, wherein at least some potential match chains are determined to be not selectable in the iterative selection and are not considered during the formation of the match chains; and obtaining a lossy encoding of the texture from the selected set of match chains.

In addition to the features of the previous paragraph, in certain example embodiments, a given match chain may not be considered in response to a determination that there is or will be another match chain formed that is equal to or better than the given match chain.

In addition to the features of the previous paragraph, in certain example embodiments, application of a function involving the hyperparameter to the match chains may enable different match chains to be compared to one another.

In addition to the features of any of the three previous paragraphs, in certain example embodiments, the iterative selection may select the best match chains.

In addition to the features of any of the four previous paragraphs, in certain example embodiments, the block bitstreams having the lowest associated distortion values for the respective block may be selected such that up to the predetermined number of distinct block bitstreams are selected.

In addition to the features of any of the five previous paragraphs, in certain example embodiments, data chunks of different sizes may be obtainable for the selected bitstreams.

In addition to the features of any of the six previous paragraphs, in certain example embodiments, the lossy encoded texture may be encoded using a lossless compressor.

In certain example embodiments, a method of providing a virtual environment in connection with a computing system is provided. An encoded texture is retrieved from a non-transitory computer readable storage medium, the texture having been encoded using the method of any of the seven previous paragraphs. The encoded texture is provided to at least one processor of the computing system for decoding of the texture and use of the decoded texture in the virtual environment. In a similar vein, in certain example embodiments, a computing system via which a virtual environment is displayable is provided. The system comprises a memory coupled to one or more processors configured to perform operations comprising: retrieving an encoded texture from a non-transitory computer readable storage medium, the texture having been encoded using the method of any of the seven previous paragraphs; and providing the encoded texture to at least one of the one or more processors of the computing system for decoding of the texture and use of the decoded texture in the virtual environment.

In certain example embodiments, there is provided a non-transitory computer readable storage medium storing instructions that, when executed by a processor, cause a computer to perform operations corresponding to the method of any of the eight previous paragraphs.

In certain example embodiments, there is provided a non-transitory computer readable storage medium storing instructions that, when executed by a processor, cause a computer to perform operations comprising: encoding each of a plurality of blocks into which the texture has been divided into a plurality of block bitstreams; for each block, selecting up to a predetermined number of distinct block bitstreams; for each selected block bitstream, obtaining a plurality of data chunks such that each data chunk is a contiguous section of the respective selected block bitstream from which it is obtained; detecting collisions among the obtained data chunks; based on the detected collisions, forming match chains with redundant data chunks such that, for each match chain, the redundant data chunks therein represent a common value of an associated block bitstream; iteratively selecting a set of match chains from among the formed match chains based on a hyperparameter, wherein at least some potential match chains are determined to be not selectable in the iterative selection and are not considered during the formation of the match chains; and obtaining a lossy encoding of the texture from the selected set of match chains.

In addition to the features of the previous paragraph, in certain example embodiments, a given match chain may not be considered in response to a determination that there is or will be another match chain formed that is equal to or better than the given match chain.

In addition to the features of the previous paragraph, in certain example embodiments, application of a function involving the hyperparameter to the match chains may enable different match chains to be compared to one another.

In addition to the features of any of the three previous paragraphs, in certain example embodiments, the iterative selection may select the best match chains.

In addition to the features of any of the four previous paragraphs, in certain example embodiments, the lossy encoded texture may be encoded using a lossless compressor.

In certain example embodiments, a texture encoding system is provided. The system includes a data store storing a texture, as well as a memory and at least one processor configured to perform operations comprising: for each block, selecting up to a predetermined number of distinct block bitstreams; for each selected block bitstream, obtaining a plurality of data chunks such that each data chunk is a contiguous section of the respective selected block bitstream from which it is obtained; detecting collisions among the obtained data chunks; based on the detected collisions, forming match chains with redundant data chunks such that, for each match chain, the redundant data chunks therein represent a common value of an associated block bitstream; iteratively selecting a set of match chains from among the formed match chains based on a hyperparameter, wherein at least some potential match chains are determined to be not selectable in the iterative selection and are not considered during the formation of the match chains; and obtaining a lossy encoding of the texture from the selected set of match chains.

In addition to the features of the previous paragraph, in certain example embodiments, a given match chain may not be considered in response to a determination that there is or will be another match chain formed that is equal to or better than the given match chain.

In addition to the features of the previous paragraph, in certain example embodiments, application of a function involving the hyperparameter to the match chains may enable different match chains to be compared to one another.

In addition to the features of any of the three previous paragraphs, in certain example embodiments, the iterative selection may select the best match chains.

In addition to the features of any of the four previous paragraphs, in certain example embodiments, the block bitstreams having the lowest associated distortion values for the respective block may be selected such that up to the predetermined number of distinct block bitstreams are selected.

In addition to the features of any of the five previous paragraphs, in certain example embodiments, data chunks of different sizes may be obtainable for the selected bitstreams.

In addition to the features of any of the six previous paragraphs, in certain example embodiments, the at least one processor may be configured to perform operations further comprising encoding the lossy encoded texture using a lossless compressor.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

**Claims**

1. A method of encoding a texture, the method comprising:

    encoding each of a plurality of blocks into which the texture has been divided into a plurality of block bitstreams, each of the block bitstreams corresponding to a respective encoding configuration and having a distortion value associated therewith;

for each block, selecting the block bitstreams having the lowest associated distortion values for the respective block such that up to a predetermined number of distinct block bitstreams are selected;

for each selected block bitstream, obtaining a plurality of data chunks such that each data chunk is a contiguous section of the respective selected block bitstream from which it is obtained, wherein data chunks of different sizes are obtainable for the selected bitstreams;

detecting collisions among the obtained data chunks;

based on the detected collisions, forming match chains with redundant data chunks such that, for each match chain, the redundant data chunks therein represent a common value of an associated block bitstream;

selecting the best match chains from among the formed match chains, the best match chains being determined using a hyperparameter; and

obtaining a lossy encoding of the texture from the selected best match chains.

2. The method of claim 1, wherein the data chunks start from different byte locations.

3. The method of claim 1 or claim 2, wherein for each block, as many distinct block bitstreams as possible, up to the predetermined number, are selected;

the method further comprising providing an indicator for each block for which the number of selected block bitstreams is less than the predetermined number.

4. The method of any one of claims 1-3, further comprising receiving input specifying a maximum distortion value for one or more specified blocks in the plurality of blocks,

wherein for each of the one or more specified blocks, only those block bitstreams having distortion values better than the maximum distortion value are selectable for the respective specified block.

5. The method of any one of claims 1-4, wherein the obtaining of the data chunks comprises:

extracting a subset of valid data chunks for a given selected block bitstream; and

generating the remaining data chunks for the given selected block bitstream from the extracted subset.

6. The method of any one of claims 1-5, wherein for each selected block bitstream, in the obtaining of the plurality of data chunks, the data chunks for the respective selected block bitstream start from each position of the respective selected block bitstream and span until the end of the of the respective selected block bitstream such that the respective data chunk has a minimum data chunk size.

7. The method of any one of claims 1-6, further comprising dividing the texture into slices each including a predetermined number of blocks,

wherein the slices are treated as individual textures to be separately divided into blocks.

8. The method of any one of claims 1-7, wherein match chains that are determined to be not selectable in the iterative selection are not considered for the formation of the match chains.

9. The method of claim 8, further comprising discarding a given match chain in response to a determination that there is or will be another match chain formed that is equal to or better than the given match chain.

10. The method of any one of claims 1-9, wherein the hyperparameter trades off rate and distortion and is a part of a defined function that determines which match chains are best.

11. The method of any one of claims 1-10, further comprising encoding the lossy encoded texture using a lossless compressor.

12. A method of providing a virtual environment in connection with a computing system, the method comprising:

retrieving an encoded texture from a non-transitory computer readable storage medium, the texture having been encoded using the method of any one of claims 1-11; and

providing the encoded texture to at least one processor of the computing system for decoding of the texture and use of the decoded texture in the virtual environment.

13. A non-transitory computer readable storage medium storing instructions that, when executed by a processor, cause a computer to perform operations corresponding to the method of any one of claims 1-12.

14. A computing system via which a virtual environment is displayable, the system comprising:
   a memory coupled to one or more processors configured to perform operations comprising:

   retrieving an encoded texture from a non-transitory computer readable storage medium, the texture having been encoded using the method of any one of claims 1-13; and
   providing the encoded texture to at least one of the one or more processors of the computing system for decoding of the texture and use of the decoded texture in the virtual environment.

15. A texture encoding system, comprising:

   a data store storing a texture;
   a memory and at least one processor configured to perform operations comprising:

      retrieving the texture from a data store;
      dividing the texture into a plurality of blocks;
      encoding each of the blocks into a plurality of block bitstreams, each of the block bitstreams corresponding to a respective encoding configuration and having a distortion value associated therewith;
      for each block, selecting the block bitstreams having the lowest associated distortion values for the respective block such that up to a predetermined number of distinct block bitstreams are selected;
      for each selected block bitstream, obtaining a plurality of data chunks such that each data chunk is a contiguous section of the respective selected block bitstream from which it is obtained, the data chunks for the respective selected block bitstream starting from each position of the respective selected block bitstream and spanning until the end of the of the respective selected block bitstream such that the respective data chunk has a minimum data chunk size, wherein data chunks of different sizes are obtainable for the selected bitstreams;
      detecting collisions among the obtained data chunks;
      based on the detected collisions, forming match chains with redundant data chunks such that, for each match chain, the redundant data chunks therein represent a common truncated value of an associated block bitstream;
      iteratively selecting the best match chains from among the formed match chains, the best match chains being determined using a hyperparameter; and
      obtaining a lossy encoding of the texture from the iteratively selected best match chains.

**Fig. 1**

Fig. 2

EP 4 462 363 A1

$e_{1,N}(d_{1,N})$

$e_{3,N}(d_{3,N})$

END

...

...

$e_{1,2}(d_{1,2})$   $e_{2,2}(d_{2,2})$   $e_{3,2}(d_{3,2})$

$e_{1,1}(d_{1,1})$   $e_{2,1}(d_{2,1})$   $e_{3,1}(d_{3,1})$

$b_1$   $b_2$   $b_3$   ...

302

Texture Block

$e_{N,N}(d_{N,N})$

...

$e_{N,2}(d_{N,2})$

...   $b_M$

$e_{N,1}(d_{N,1})$

**Fig. 3**

8-byte bitstream

Encoding configuration number j for block i

$e_{i,j}$

| v1 | v2 | v3 | v4 | v5 | v6 | v7 | v8 |

8-byte chunk

7-byte chunk

6-byte chunk

5-byte chunk

4-byte chunk

| 8-byte chunk | 7-byte chunk | 6-byte chunk | 5-byte chunk | 4-byte chunk |
|---|---|---|---|---|
| value : **v1v2v3v4v5v6v7v8** | value : **v2v3v4v5v6v7v8** | value : **v3v4v5v6v7v8** | value : **v4v5v6v7v8** | value : **v5v6v7v8** |
| index : **j** | index : **j** | index : **j** | index : **j** | index : **j** |
| block : **i** | block : **i** | block : **i** | block : **i** | block : **i** |
| start : **0** | start : **1** | start : **2** | start : **3** | start : **4** |

# Fig. 4

| 8-byte chunk<br>4-byte truncated<br>value : **0x7F3E**<br>index : **206**<br>block : **304**<br>start : **0** | 4-byte chunk<br>4-byte truncated<br>value : **0x7F3E**<br>index : **77**<br>block : **587**<br>start : **4** | 6-byte chunk<br>4-byte truncated<br>value : **0x7F3E**<br>index : **397**<br>block : **1226**<br>start : **2** | 7-byte chunk<br>4-byte truncated<br>value : **0x7F3E**<br>index : **12**<br>block : **1789**<br>start : **1** | 5-byte chunk<br>4-byte truncated<br>value : **0x7F3F**<br>index : **36**<br>block : **980**<br>start : **3** | 6-byte chunk<br>4-byte truncated<br>value : **0x7F3F**<br>index : **287**<br>block : **1056**<br>start : **2** |
|---|---|---|---|---|---|

4-byte Match Chain (Length : 4)      4-byte Match Chain (Length :2)

| 8-byte chunk<br>5-byte truncated<br>value : **0x7F3EA**<br>index : **206**<br>block : **304**<br>start : **0** | ~~4-byte chunk<br>5-byte truncated<br>value : 0x7F3EA<br>index : 77<br>block : 587<br>start : 4~~ | 6-byte chunk<br>5-byte truncated<br>value : **0x7F3EA**<br>index : **397**<br>block : **1226**<br>start : **2** | ~~7-byte chunk<br>5-byte truncated<br>value : 0x7F3EB<br>index : 12<br>block : 1789<br>start : 1~~ | 5-byte chunk<br>5-byte truncated<br>value : **0x7F3FD**<br>index : **36**<br>block : **980**<br>start : **3** | 6-byte chunk<br>5-byte truncated<br>value : **0x7F3FD**<br>index : **287**<br>block : **1056**<br>start : **2** |
|---|---|---|---|---|---|

5-byte Match Chain (Length : 2)      5-byte Match Chain (Length : 2)

**Fig. 5**

EP 4 462 363 A1

| truncated value : **x**<br>index : $j_1$<br>block : $i_1$<br>distortion : $d_{i_1,j_1}$ | truncated value : **x**<br>index : $j_2$<br>block : $i_2$<br>distortion : $d_{i_2,j_2}$ | truncated value : **x**<br>index : $j_3$<br>block : $i_3$<br>distortion : $d_{i_3,j_3}$ | $\cdots$ | truncated value : **x**<br>index : $j_N$<br>block : $i_N$<br>distortion : $d_{i_N,j_N}$ |

# Fig. 6

truncated value : $x$
index : $j_1$
block : $i_1$
distortion : $d_{i_1, j_1}$

truncated value : $x$
index : $j_2$
block : $i_2$
distortion : $d_{i_2, j_2}$

truncated value : $x$
index : $j_3$
block : $i_3$
distortion : $d_{i_3, j_3}$

truncated value : $x$
index : $j_N$
block : $i_N$
distortion : $d_{i_N, j_N}$

Match Chain (Length : 2)

Another Match Chain (Length : 3)

Another Match Chain (Length : N -1 )

**Fig. 7**

| truncated value : **x** | truncated value : **x** | truncated value : **x** | | truncated value : **x** |
|---|---|---|---|---|
| index : $j_1$ | index : $j_2$ | index : $j_3$ | $\cdots$ | index : $j_N$ |
| block : $i_1$ | block : $i_2$ | block : $i_3$ | | block : $i_N$ |
| distortion : $d_{i_1,j_1}$ | distortion : $d_{i_2,j_2}$ | distortion : $d_{i_3,j_3}$ | | distortion : $d_{i_N,j_N}$ |

Optimal Match Chain (Length : 2)

Optimal Match Chain (Length : 3)

$\cdots$

Optimal Match Chain (Length : N )

# Fig. 8

Fig. 9

Fig. 10

| 4-byte truncated value : **0x7F3E** | 4-byte truncated value : **0x7F3E** | 4-byte truncated value : **0x7F3E** |
|---|---|---|
| index : **206** | index : **127** | index : **56** |
| block : **304** | block : **412** | block : **209** |
| distortion : **25.2** | distortion : **40.3** | distortion : **62.7** |

4-byte Match Chain (Length : 3)

| 5-byte truncated value : **0x7F3EC** | 5-byte truncated value : **0x7F3EC** | 5-byte truncated value : **0x7F3EC** |
|---|---|---|
| index : **206** | index : **127** | index : **56** |
| block : **304** | block : **412** | block : **209** |
| distortion : **25.2** | distortion : **40.3** | distortion : **62.7** |

5-byte Match Chain (Length : 3)

**Fig. 11**

**Fig. 12**

Retrieve texture — 1302

Stage 1
Divide texture into blocks — 1304
Encode blocks into block bitstreams — 1306
Select block bitstreams with low distortions — 1308

Stage 2
Obtain data chunks — 1310

Stage 3
Detect collisions among the obtained data chunks — 1312
Form match chains, and select optimal match chains — 1314
Apply selected match chains — 1316

Apply lossless compression — 1318

# Fig. 13

Encoding Computing System — 1404

Processor(s) — 1406

Memory — 1408

Working RAM — 1412

Encoding Application — 1414

1416 — Lossy Libraries | Lossless Libraries — 1418

H/W UI Elements — 1410

"Raw" Texture Repository — 1402

Encoded Texture Repository — 1420

**Fig. 14**

```
┌─────────────────────────────┐
│   Retrieve encoded texture   │⟋─1502
└─────────────────────────────┘
               │
               ▼
┌─────────────────────────────┐
│  Apply lossless decompressor │⟋─1504
└─────────────────────────────┘
               │
               ▼
┌─────────────────────────────┐
│   Apply lossy texture decoder │⟋─1506
└─────────────────────────────┘
               │
               ▼
┌─────────────────────────────┐
│  Generate virtual environment │⟋─1508
│   based on decoded texture    │
└─────────────────────────────┘
```

# Fig. 15

1602

1604

1630

1632

Slot

Slot I/F

1616

Controller
Terminal(s)

1634

Network I/F

1624

Speakers

1628

Codec Circuit

Wireless
Controller I/F

1618

Sound I/O
Terminal

1626

Processor(s)

Memory

1606

1608

1610

Power Button

Power Control
Circuit

1622

Touch Panel
Controller

1620

Touch Panel

1612

Battery

1624

Display

1614

Pins

# Fig. 16

Europäisches
Patentamt

European
Patent Office

Office européen
des brevets

# EUROPEAN SEARCH REPORT

Application Number

EP 24 17 5092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/057492 A1 (KOTHANDARAMAN SREENIVAS [US] ET AL) 23 February 2023 (2023-02-23) * paragraph [0302] - paragraph [0309]; figures 16, 19 * | 1-15 | INV. G06T9/00 H04N19/119 H04N19/147 H04N19/174 H04N19/184 H04N19/91 |
| X | NAGAYASU D ET AL: "A decompression pipeline for accelerating out-of-core volume rendering of time-varying data", COMPUTERS AND GRAPHICS, ELSEVIER, GB, vol. 32, no. 3, 1 June 2008 (2008-06-01), pages 350-362, XP022732345, ISSN: 0097-8493, DOI: 10.1016/J.CAG.2008.04.007 [retrieved on 2008-05-04] * figure 4 * | 1-15 | |

TECHNICAL FIELDS
SEARCHED      (IPC)

G06T
H04N

The present search report has been drawn up for all claims

| Place of search | Date of completion of the search | Examiner |
|---|---|---|
| Munich | 19 September 2024 | Oelbaum, Tobias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 24 17 5092

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | Publication date | Patent family member(s) | Publication date |
|---|---|---|---|
| US 2023057492 A1 | 23-02-2023 | EP 4138394 A2 | 22-02-2023 |
| | | US 2023057492 A1 | 23-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 52517823

- US 63465672 B